# EUROPEAN PATENT APPLICATION

(11) **EP 4 723 628 A1**
(43) Date of publication of application: **08.04.2026**
(21) Application number: 24815936.0
(22) Date of filing: 03.06.2024
(51) Int. Cl.: H04N 19/124, H04N 19/70, H04N 19/184, H04N 19/136

(54) **ENCODING/DECODING METHOD AND APPARATUS BASED ON VIDEO OPTIMIZATION ACCORDING TO VIDEO USAGE, AND METHOD FOR TRANSMITTING BITSTREAM**

(30) Priority: 01.06.2023 US 202363470448 P; 25.06.2023 US 202363523105 P
(71) Applicant: LG Electronics Inc., Yeongdeungpo-gu Seoul 07336 (KR)
(72) Inventor: KIM, Chulkeun, Seoul 06772 (KR); TAN, Hendry, Seoul 06772 (KR); LIM, Jaehyun, Seoul 06772 (KR); GWAK, Donggyu, Seoul 06772 (KR)
(74) Representative: Maikowski & Ninnemann Patentanwälte Partnerschaft mbB
(86) International application number: PCT/KR2024/007557
(87) International publication number: WO 2024/248562

(57) **Abstract**

The present disclosure relates to an encoding/decoding method and apparatus for optimizing quantization according to video usage, a method for transmitting a bitstream, and a bitstream storage medium. A decoding method according to an embodiment of the present disclosure may comprise the steps of: acquiring data optimization information related to a video data optimization method according to the purpose of video data; and reconstructing the video data on the basis of the data optimization information, wherein the data optimization information includes data optimization application information indicating whether optimization is performed for each usage of the video data.

## Description

### [Technical Field]

The present disclosure relates to a data encoding/decoding method and apparatus including an image, a feature, etc., and more specifically, relates to an encoding/decoding method and apparatus based on image optimization according to image usage and a method for transmitting a bitstream generated by the encoding method/apparatus of the present disclosure.

### [Background Art]

Along with the development of machine learning technology, the demand for image processing-based artificial intelligence services is increasing. In order to effectively process a large amount of image data required for artificial intelligence services within limited resources, an image compression technology optimized for performing machine tasks is essential. However, since the existing image compression technologies have been developed with the goal of high-resolution and high-quality image processing for human vision, there is a problem that they are not suitable for artificial intelligence services. Accordingly, research and development on new machine-oriented image compression technologies suitable for artificial intelligence services are actively being conducted.

### [Disclosure]

### [Technical Problem]

The present disclosure is to provide an image encoding/decoding method and apparatus with improved encoding/decoding efficiency.

In addition, the present disclosure is to provide an image encoding/decoding method and apparatus based on image optimization according to image usage.

In addition, the present disclosure is to provide a method and an apparatus for encoding/decoding an image by selecting an image optimization method suitable for human perception or a machine task (machine perception).

In addition, the present disclosure is to provide a method and an apparatus for encoding/decoding an image based on a VCM (Video Coding for Machine) bitstream based on image usage.

In addition, the present disclosure is to provide a method for defining the attribute of necessary information according to the type of a machine task.

In addition, the present disclosure is to provide an image optimization method intended for performance improvement during human processing or machine perception.

In addition, the present disclosure is to provide a method for transmitting a bitstream generated by an image encoding method or apparatus according to the present disclosure.

In addition, the present disclosure is to provide a recording medium for storing a bitstream generated by an image encoding method or apparatus according to the present disclosure.

In addition, the present disclosure is to provide a recording medium for storing a bitstream which is received and decoded by an image decoding apparatus according to the present disclosure and used for reconstructing an image.

The technical problems to be achieved in the present disclosure are not limited to the technical problems described above, and other technical problems not described may be clearly understood by those of ordinary skill in the art from the following descriptions.

### [Technical Solution]

A decoding method that may be performed by a data (e.g., image, feature, etc.) decoding apparatus according to an aspect of the present disclosure includes obtaining data optimization information related to an image data optimization method according to a purpose of image data and reconstructing the image data based on the data optimization information, wherein the data optimization information may include data optimization application information representing whether the image data is optimized for each usage.

Meanwhile, the data optimization information may further include data optimization purpose information representing a purpose of optimizing the image data.

Meanwhile, the data optimization purpose information may further include machine task optimization information representing an image data optimization method for performing a machine task.

Meanwhile, the data optimization purpose information may further include human perception optimization information representing an image data optimization method for human perception.

Meanwhile, the human perception optimization information may be obtained based on the machine task optimization information.

Meanwhile, the machine task optimization information may be obtained based on the human perception optimization information.

Meanwhile, the data optimization information may further include data optimization persistence information representing the persistence of an image data optimization method.

Meanwhile, the data optimization persistence information may include persistence cancellation information representing whether optimization persistence is cancelled.

Meanwhile, based on the persistence cancellation information, at least one of persistence degree information representing an optimization persistence degree, target information representing an optimization purpose target or type information representing an optimization attribute may be further obtained.

Meanwhile, the data optimization information may be obtained based on information on whether it is optimized, representing whether data is optimized.

Meanwhile, information on whether it is optimized may be signaled as a bitstream.

Meanwhile, the data optimization information may be signaled as a bitstream.

An encoding method that may be performed by a data (e.g., image, feature, etc.) encoding apparatus according to an aspect of the present disclosure includes determining data optimization information related to an image data optimization method according to a purpose of image data and encoding the data optimization information into a bitstream, wherein the data optimization information may include data optimization application information representing whether the image data is optimized for each usage.

A recording medium according to another aspect of the present disclosure may store a bitstream generated by the image encoding method or image encoding apparatus of the present disclosure.

A method for transmitting a bitstream according to another aspect of the present disclosure may transmit a bitstream generated by the encoding method or data encoding apparatus of the present disclosure to a data decoding apparatus.

The features briefly summarized above for the present disclosure are merely an exemplary aspect of a detailed description of the present disclosure described below, and do not limit the scope of the present disclosure.

### [Advantageous Effects]

According to the present disclosure, an image encoding/decoding method and apparatus with improved encoding/decoding efficiency may be provided.

In addition, according to the present disclosure, an image encoding/decoding method and apparatus for performing image optimization according to image usage may be provided.

In addition, according to the present disclosure, image optimization according to image usage may be applied.

In addition, according to the present disclosure, a method and an apparatus for defining the attribute of necessary information according to image usage may be provided.

In addition, according to the present disclosure, a method and an apparatus for encoding/decoding an image with improved image coding performance during human perception or machine perception may be provided.

In addition, according to the present disclosure, a VCM (VIDEO CODING FOR MACHINE) bitstream according to image usage may be generated.

In addition, according to the present disclosure, a method and an apparatus for encoding/decoding an image by selecting an image optimization method suitable for human perception or a machine task may be provided.

In addition, according to the present disclosure, information necessary to express an image optimization method suitable for human perception or a machine task may be signaled.

In addition, according to the present disclosure, a method for transmitting a bitstream generated by an image encoding method or apparatus according to the present disclosure may be provided.

In addition, according to the present disclosure, a recording medium for storing a bitstream generated by an image encoding method or apparatus according to the present disclosure may be provided.

In addition, according to the present disclosure, a recording medium for storing a bitstream which is received and decoded by an image decoding apparatus according to the present disclosure and used for reconstructing an image may be provided.

The effects obtainable from the present disclosure are not limited to the effects described above, and other effects not described may be clearly understood by those of ordinary skill in the art from the following descriptions.

### [Description of Drawings]

FIG. 1 is a diagram schematically showing a VCM system to which embodiments of the present disclosure may be applied.
FIG. 2 is a diagram schematically showing a VCM pipeline structure to which embodiments of the present disclosure may be applied.
FIG. 3 is a diagram schematically showing an image/video encoder to which embodiments of the present disclosure may be applied.
FIG. 4 is a diagram schematically showing an image/video decoder to which embodiments of the present disclosure may be applied.
FIG. 5 is a flowchart schematically showing a feature/feature map encoding procedure to which embodiments of the present disclosure may be applied.
FIG. 6 is a flowchart schematically showing a feature/feature map decoding procedure to which embodiments of the present disclosure may be applied.
FIG. 7 is a diagram representing an example of a feature extraction and reconstruction method to which embodiments of the present disclosure may be applied.
FIG. 8 is a diagram representing an example of an image partitioning method to which embodiments of the present disclosure may be applied.
FIGS. 9 and 10 are diagrams representing an example of an image encoding/decoding system including a VCM image encoder and decoder.
FIG. 11 is a diagram representing an example of a VCM layer structure.
FIG. 12 is a diagram representing an example of a VCM bitstream consisting of an encoded abstraction feature and NNAL information.
FIG. 13 is a diagram for describing an example of a case in which a coding bitstream to which a coding optimization method according to an embodiment of the present disclosure is applied is used on a receiving target side.
FIG. 14 is a diagram for describing a decoding method according to an embodiment of the present disclosure.
FIG. 15 is a diagram for describing an encoding method according to an embodiment of the present disclosure.
FIG. 16 is a diagram illustrating an example of a content streaming system to which embodiments of the present disclosure may be applied.
FIG. 17 is a diagram illustrating another example of a content streaming system to which embodiments of the present disclosure may be applied.

### [Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

### Overview of VCM System

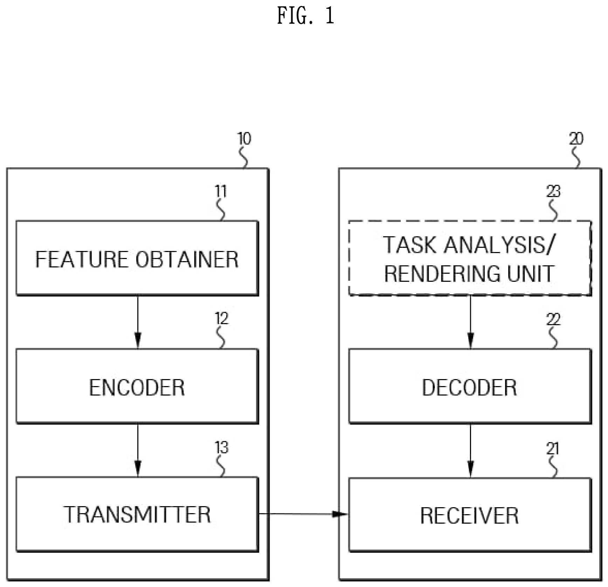

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set, and a feature or a feature map may be referred to as 'feature information'.

An encoding apparatus 10 may include a feature obtainer 11, an encoder 12 and a transmitter 13.

A feature obtainer 11 may obtain a feature/a feature map for a source image/video. According to an embodiment, a feature obtainer 11 may obtain a feature/a feature map from an external device, e.g., a feature extraction network. In this case, a feature obtainer 11 performs a feature reception interface function. Alternatively, a feature obtainer 11 may obtain a feature/a feature map by executing a neural network (e.g., CNN, DNN, etc.) by using a source image/video as an input. In this case, a feature obtainer 11 performs a feature extraction network function.

According to an embodiment, the encoding apparatus 10 may further include the source image generator (not shown) for obtaining a source image/video or may include it instead of the feature obtainer 11. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 12 may encode a feature/a feature map obtained by a feature obtainer 11. An encoder 12 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may obtain a feature/a feature map information or data output in the form of a bitstream, and may transmit the obtained information or data to a decoding apparatus 20 or another external object through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network. The transmitter 13 may be provided as a transmission device separate from the encoder 12, and in this case, the transmission device may include at least one processor for obtaining a feature/a feature map information or data output in the form of a bitstream, and a transmitter for transmitting it in the form of a file or streaming.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

### VCM Pipeline

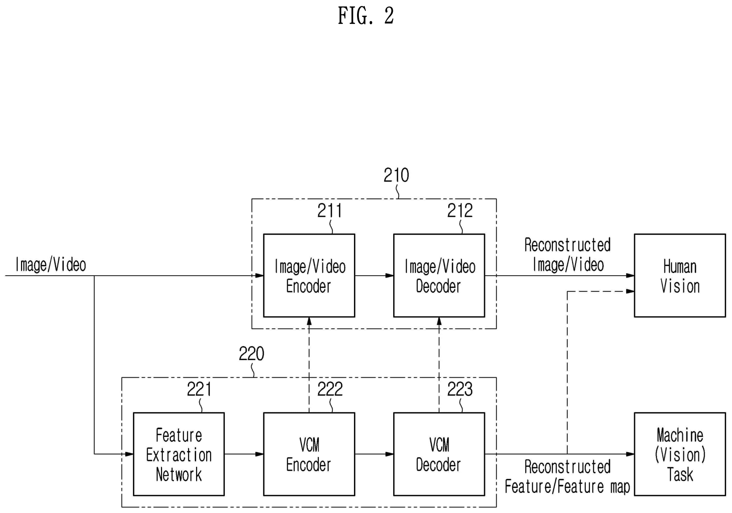

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

### Encoder

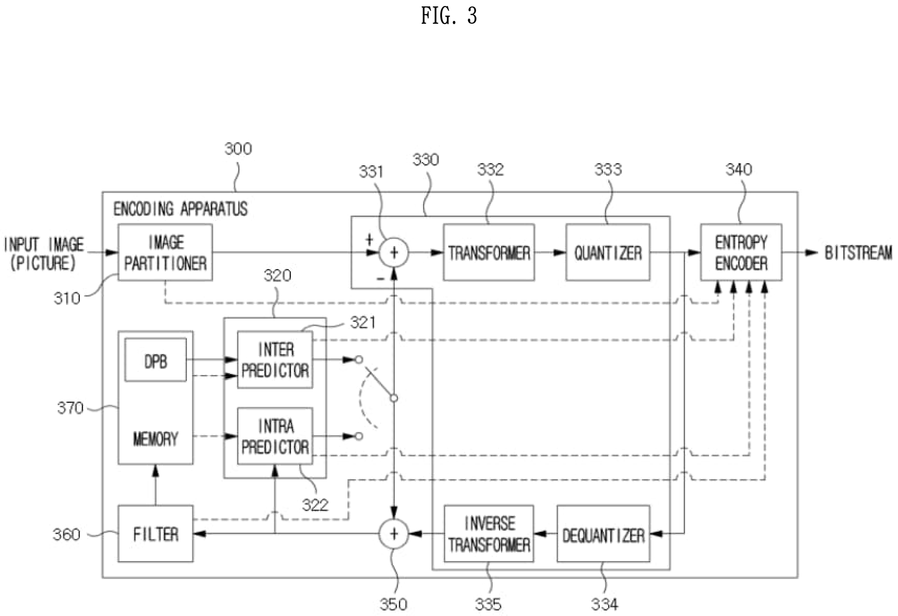

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (unit). A coding unit may be recursively partitioned from a coding tree unit (CTU) or a largest coding unit (LCU, L unit) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in the unit of a current block or a unit. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block, a collocated unit (col unit), etc., and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

### Decoder

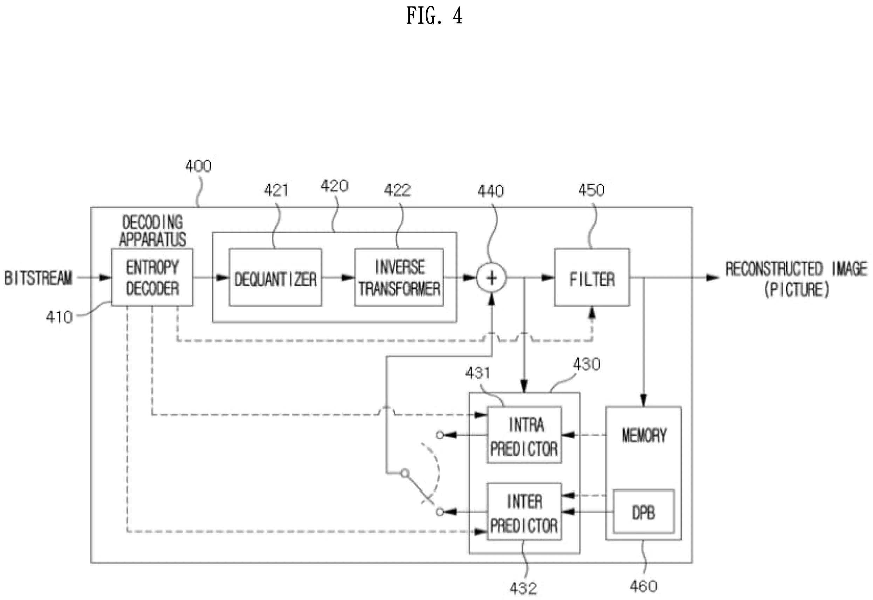

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder). In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

### Feature/Feature Map Encoding Procedure

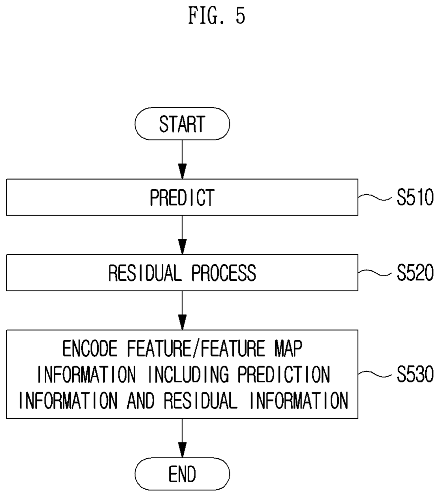

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

### Feature/Feature Map Decoding Procedure

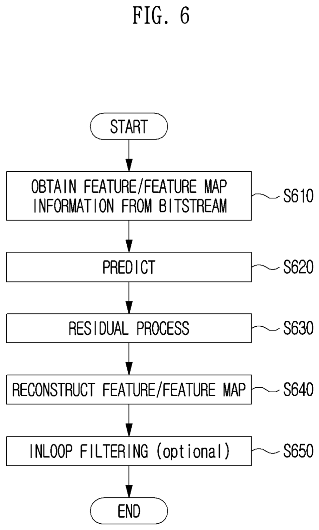

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

### Feature Extraction Method and Data Distribution Characteristics

Embodiments of the present disclosure propose a prediction process necessary for compressing an activation (feature) map generated in the hidden layer of a deep neural network and a method for generating a related bitstream.

Input data input to a deep neural network undergoes the association process of multiple hidden layers, and the operation result of each hidden layer is output as a feature/a feature map with various sizes and channel counts according to the type of a deep neural network in use and the location of a hidden layer within a corresponding deep neural network.

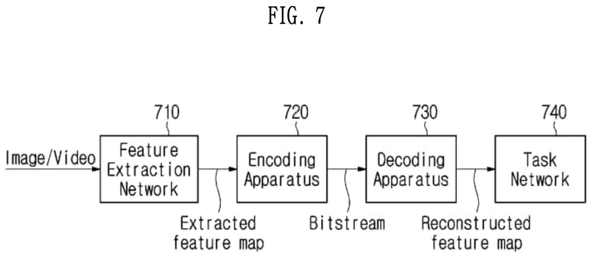

FIG. 7 is a diagram representing an example of a feature extraction and reconstruction method to which embodiments of the present disclosure may be applied.

Referring to FIG. 7, the feature extraction network 710 may extract the intermediate layer activation (feature) map of a deep neural network from a source image/video and output an extracted feature map. The feature extraction network 710 may be a set of consecutive hidden layers from the input of a deep neural network.

The encoding apparatus 720 may compress an output feature map and output it in the form of a bitstream, and the decoding apparatus 730 may reconstruct a (compressed) feature map from an output bitstream. The encoding apparatus 720 may correspond to the encoder 12 of FIG. 1, and the decoding apparatus 720 may correspond to the decoder 22 of FIG. 1. The task network 740 may perform a task based on a reconstructed feature map.

The number of channels of a feature map which is the compression target of VCM may vary depending on a network used for feature extraction and an extraction location and may be greater than the number of channels of input data.

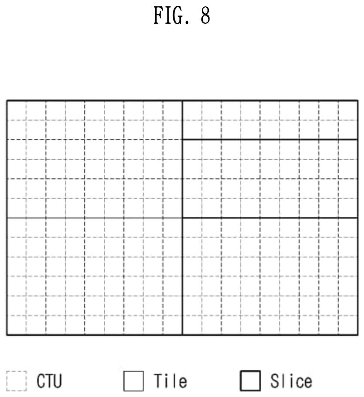

FIG. 8 is a diagram representing an example of an image partitioning method to which embodiments of the present disclosure may be applied. As an example, it is a diagram representing a CTU, a slice, a tile, etc. within an image.

A video/image coding method according to this document may be performed based on the following partitioning structure. A procedure such as prediction, residual processing ((inverse) transform, (de)quantization, etc.), syntax element coding, filtering, etc. may be performed based on a CTU or a CU (and/or a TU, a PU) derived based on the partitioning structure of FIG. 8. A block partitioning procedure may be performed in an encoding apparatus and partitioning-related information may be encoded and transmitted to a decoding apparatus in the form of a bitstream. A decoding apparatus may derive the block partitioning structure of a current picture based on partitioning-related information obtained from a bitstream and perform a series of procedures for image decoding (e.g., prediction, residual processing, block/picture reconstruction, in-loop filtering, etc.) based on this. A CU size may be the same as a TU size, and a plurality of TUs may exist within a CU area. Meanwhile, a CU size may generally represent a luma component (sample) CB size. A TU size may generally represent a luma component (sample) TB size. A chroma component (sample) CB or TB size may be derived based on a luma component (sample) CB or TB size according to a component ratio according to the color format (chroma format, e.g., 4:4:4, 4:2:2, 4:2:0, etc.) of a picture/an image, and transform/inverse transform may be performed in the unit of a TU(TB).

In addition, in the coding of a video/an image according to this document, an image processing unit may have a hierarchical structure. One picture may be partitioned into one or more CUs, and one or more CUs may be divided into one or more tiles, bricks, slices and/or tile groups. One slice may include one or more bricks. One brick may include one or more CTU rows within a tile. A slice may include an integer number of bricks of a picture. One tile group may include one or more tiles. One tile may include one or more CTUs. The CTU may be partitioned into one or more CUs. A tile group may include an integer number of tiles according to a tile raster scan within a picture. A slice header may carry information/a parameter that may be applied to a corresponding slice (blocks within a slice). A picture header may carry information/a parameter that may be applied to a corresponding picture (or a block within a picture). When an encoding/decoding apparatus has a multi-core processor, an encoding/decoding procedure for the tile, slice, brick and/or tile group may be processed in parallel. In this document, a slice or a tile group may be used interchangeably. In other words, a tile group header may be referred to as a slice header. Here, a slice may have one of the slice types including slice I, slice P and slice B.

An encoding apparatus may determine a tile/tile group, a brick, a slice and the largest and least coding unit sizes by considering coding efficiency or parallel processing according to the characteristics of a video image (e.g., resolution) and information about this or information that may derive this may be included in a bitstream.

A decoding apparatus may obtain information representing whether the tile/tile group, brick, slice and CTU within a tile of a current picture are partitioned into multiple coding units. Efficiency may be improved by ensuring that this information is obtained (transmitted) only under a specific condition.

The slice header (slice header syntax) may include information/a parameter that may be commonly applied to the slice. An APS (an APS syntax) or a PPS (a PPS syntax) may include information/a parameter that may be commonly applied to one or more pictures. The SPS (SPS syntax) may include information/a parameter that may be commonly applied to one or more sequences. The VPS (VPS syntax) may include information/a parameter that may be commonly applied to a multi-layer. The DPS (DPS syntax) may include information/a parameter that may be commonly applied to the entire video. The DPS may include information/a parameter related to the concatenation of a coded video sequence (CVS).

In this document, a high-level syntax may include at least one of the APS syntax, PPS syntax, SPS syntax, VPS syntax, DPS syntax, picture header syntax and slice header syntax.

In addition, for example, information regarding the partitioning and configuration, etc. of the tile/tile group/brick/slice may be configured at an encoding end through the high-level syntax and transmitted to a decoding apparatus in the form of a bitstream.

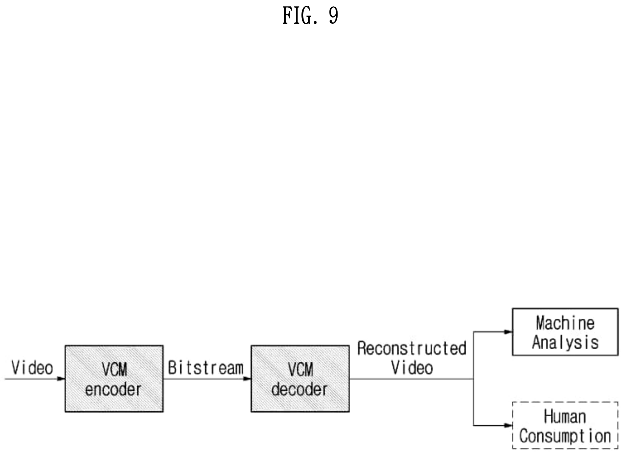

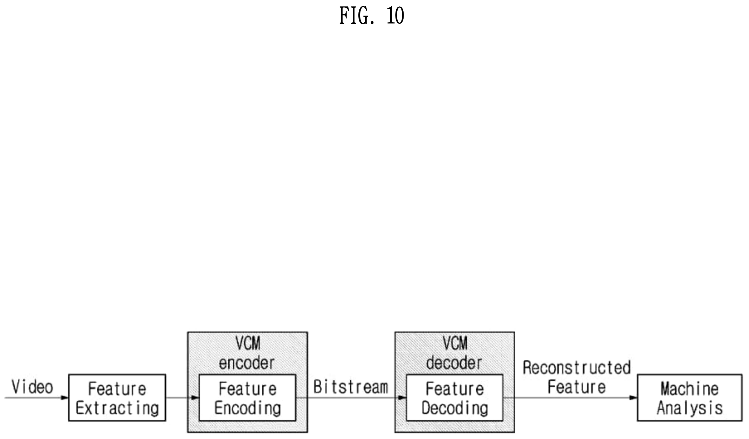

FIG. 9 is a diagram representing an example of a VCM image encoding/decoding system, and FIG. 10 is a diagram representing another example of a VCM image encoding/decoding system. As an example, FIGS. 9 and 10 may extend/redesign an image coding system (e.g., FIG. 1) to use only a part of an image source (video source) according to the request, purpose or neighboring environment of a user or a machine or obtain and use a part/information necessary for an image source. In other words, FIGS. 9 and 10 may be related to video coding for machines (VCM).

Video coding for machines (VCM) may refer to obtaining and encoding/decoding the entire image and/or a part of an image and/or information necessary for an image (feature) according to the request, purpose or neighboring environment of a user and/or a machine. In VCM, an encoding target may be an image itself, or may be information referred to as a feature extracted from an image according to the request, purpose or neighboring environment of a user and/or a machine, or may refer to a set of a series of information over time.

Referring to FIG. 9, a VCM system may include an image encoder and an image decoder for VCM. A source device (FIG. 1) may transmit encoded image information to a receiving device through a storage medium or a network. The user of an apparatus may be a person and/or a machine, respectively.

Referring to FIG. 10, a VCM system may include an image encoder and an image decoder for VCM. A source device may transmit encoded image information (feature) to a receiving device through a storage medium or a network. The user of an apparatus may be a person and/or a machine, respectively.

As an example, the process of extracting information, i.e., a feature from an image may be referred to as feature extraction. Feature extraction may be performed in both a video/image capture device and/or a video/image generation device. A feature may be information extracted/processed from an image according to the request, purpose or neighboring environment of a user and/or a machine and may refer to a set of a series of information over time.

An image encoder for VCM may perform a series of procedures such as prediction, transform, quantization, etc. for the compression and coding efficiency of the entire image and/or a part of an image and/or a feature. Encoded data may be output in the form of a bitstream.

An image decoder for VCM may decode a video/an image by performing a series of procedures such as dequantization, inverse transform, prediction, etc. corresponding to the operation of an encoding apparatus, i.e., an encoder.

A decoded image and/or feature may be rendered. It may also be used to perform a user or machine task. The example of a task may include AI, a computer vision task, etc. such as face perception, action perception, road lane perception, etc.

The present disclosure proposes various embodiments regarding the acquisition and coding of all and/or a part of an image for VCM, and unless otherwise stated, the embodiments may be performed in combination with each other. The methods/embodiments of the present disclosure may be applied to a method disclosed in the VCM (Video Coding for Machines) standard.

### VCM Layer Structure

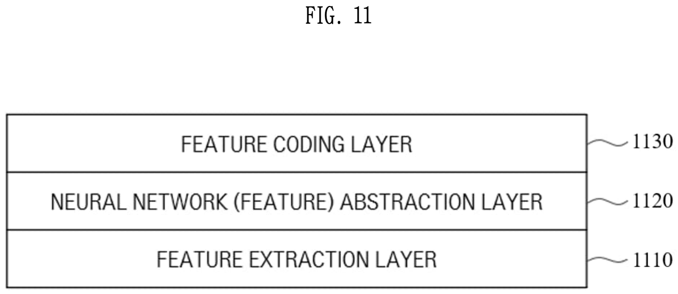

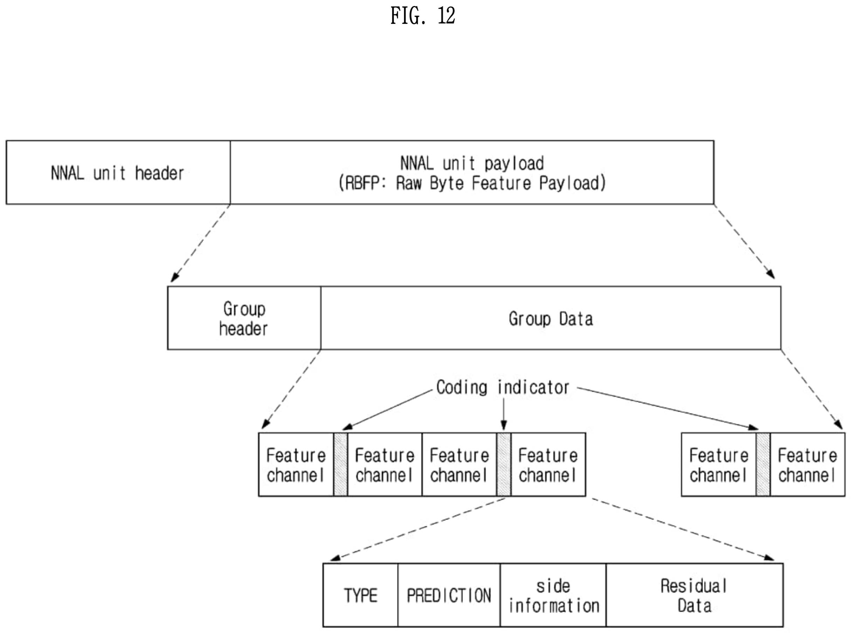

VCM may be based on a layer structure consisting of a feature coding layer, a neural network (feature) abstraction layer and a feature extraction layer. FIG. 11 is a diagram representing an example of a VCM layer structure, and FIG. 12 is a diagram representing an example of a VCM bitstream consisting of an encoded abstraction feature and NNAL information.

As an example, referring to FIG. 11, a VCM layer structure may consist of the feature extraction layer 1110, the neural network (feature) abstraction layer 1120 and the feature coding layer 1130.

The feature extraction layer 110 may refer to a layer for extracting a feature from an input source and may also include the result of extraction. The feature coding layer 1130 may refer to a layer for compressing an extracted feature and may also include the result of compression.

The neural network abstraction layer 1120 may abstract information generated from the feature extraction layer 1110 (e.g., information about an extracted feature/feature map) and transmit it to the feature coding layer 1130. The neural network abstraction layer 1120 may conceal the internal structure of the feature extraction layer 1110 and provide a consistent feature interface function through the abstraction of information. Accordingly, even when a compression target is changed due to a change in a tool (e.g., CNN, DNN, etc.), the feature coding layer 1130 may perform a consistent feature coding procedure. In the present disclosure, a neural network abstraction layer (NNAL) may also be referred to as a feature abstraction layer.

An interface between the feature extraction layer 1110 and the neural network abstraction layer 1120 and an interface between the feature coding layer 1130 and the neural network abstraction layer 1120 may be predefined, and an operation in the neural network abstraction layer 1120 may be configured to be modifiable later.

Referring to FIG. 12, a bitstream configured as shown may be referred to as a neural network abstraction layer (NNAL) unit. The NNAL unit may be an independent feature reconstruction unit. Input features for a single NNAL unit may be extracted from the same layer within a neural network. Accordingly, input features for a single NNAL unit may be forced to have the same characteristics. For example, the same feature extraction method may be applied to the input features for a single NNAL unit.

An NNAL unit may include an NNAL unit header and an NNAL unit payload. The NNAL unit header may include all information necessary to utilize an encoded feature for a task. The NNAL unit payload may include abstracted feature information. The NNAL unit payload may include a group header and group data. The group header may include configuration information of feature group data, such as a temporal order, number, or common property of feature channels constituting the feature group. A feature channel may refer to a unit of an encoded feature. The group data may include a plurality of feature channels and coding indicators, and each feature channel may include type information, prediction information, side information, and residual information. In this case, the type information may indicate an encoding method, and the prediction information may indicate a prediction method. Additionally, the side information may indicate additional information required for decoding (e.g., entropy coding, quantization related information, etc.), and the residual information may include information on encoded feature elements (i.e., a set of feature value information).

Meanwhile, according to an image processing technology including VCM, etc., the receiving target of a video, i.e., an image (e.g., human or a machine, etc.) may be changed or a receiving purpose (e.g., human perception or machine processing, etc.) may be changed. In other words, as the receiving target of a bitstream is extended to a machine, i.e., a machine as well as a user, i.e., a human, various optimization methods may be applied to an image according to each receiving target and the intention of an image, i.e., a purpose. For example, an image optimization method includes all methods for adjusting quality, performance, efficiency, etc. that may be applied to an image including the number of pixels of an image, a bit rate, a method for adjusting an image color, etc. including pre/post processing that may be applied to an image, and for example, may include all methods for increasing or decreasing the number of pixels for some objects by distinguishing between objects included in an image. In addition, image optimization may also be expressed by using a term such as image calibration, image adjustment, image change, image modification, etc. In other words, when describing an embodiment of the present disclosure below, a term of image optimization may be substituted with a term such as image calibration, image adjustment, image change, image modification, etc.

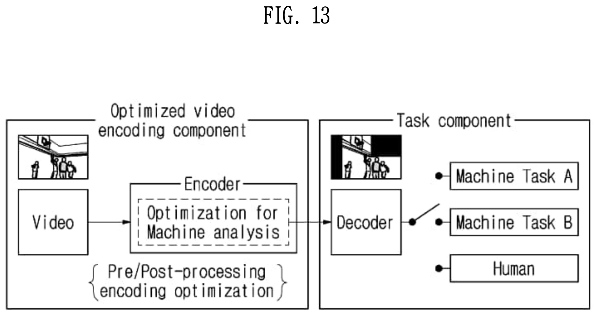

Meanwhile, when an image receiving target or an image receiving purpose is changed, an image optimization method (e.g., image pre/post processing, etc.) for efficient image processing and processing efficiency improvement may also need to be changed based on a corresponding purpose or a corresponding receiving target. However, an image optimization method that may be expressed in a bitstream and the attribute and purpose of a coded picture (i.e., image, image, video, etc.) may not match the image receiving purpose, i.e., the intended use of an image of a receiving target, i.e., a user or a machine. It is described in detail by referring to FIG. 13. FIG. 13 is a diagram for describing an example of a case in which a coding bitstream to which a coding optimization method according to an embodiment of the present disclosure is applied is used on a receiving target side. First, as shown in FIG. 13, there may be an encoding component for encoding a video, i.e., an optimization video encoding component for determining that an optimization method will be applied and a task component, i.e., an element for consuming a coding video. As an example, a task component may include a decoding component and may be a target of decoding a coding video. Meanwhile, when a task component receives a bitstream, it may be desirable to consider the characteristics of a task component consuming a coding video (e.g., the characteristics of a receiving target) or a task component's intention for receiving a video, purpose of use, etc. for improving coding efficiency, performance, etc. However, an encoding component illustrated in FIG. 13 and an element for consuming a coding video (e.g., a decoding component) may be configured together or may be configured respectively. In other words, an encoding component and a task component may be configured independently, and each may be a different service provider. In this case, a difference may arise between an optimization method suitable for a task component and an optimization method applied by an encoding component during video coding, thereby degrading coding performance or efficiency. In addition, as a coding video is used for multiple purposes, a problem may arise due to a difference between an optimization method suitable for some task components and an optimization method applied to a video. As an example, in the example of FIG. 13, a coding video may be used for various usages such as machine tasks A and B and/or human perception (e.g., human viewing). In this case, an optimization method applied to encoding may be suitable for all of machine tasks A and B and human perception, but it may not be. In this case, referring to FIG. 13, on a task component side, the background may be partially removed from a decoded video unlike the original. As such, when the information of an input video is changed through optimization, a corresponding optimization method is not suitable for a task component that performs some tasks requiring changed information, which may cause a problem such as significantly lowering the quality of a reconstructed image. In addition, a problem may arise when the video use purpose of a receiving target (e.g., a user, a machine, etc.) is changed. For example, when a receiving target is changed or when the video use purpose of a receiving target is changed, a picture encoded by an image optimization method suitable for another existing task component is no longer suitable for a new task component or a new video use purpose, which may degrade coding performance or reduce efficiency.

In order to solve the above-mentioned problem, only when a user, i.e., human or machine, i.e., a machine side, i.e., a decoder side must be able to identify whether a currently received bitstream is optimized, an optimization range and an optimization method, it may determine whether a received bitstream is suitable and request an optimization method suitable for a purpose. The present disclosure relates to an optimization method according to an image purpose during image processing that may solve the above-mentioned problem and information related to optimization, and relates to a technology for signaling corresponding information. More specifically, the present disclosure defines an optimization method that may be applied to an encoding picture, defines a method for expressing an optimization method applied to an encoding picture and a method for expressing the attribute and purpose of an encoded picture and describes signaling of information related to an optimization method. More specifically, the present disclosure may relate to a coding layer and structure described above, and in particular, may relate to a coding optimization method applied according to whether a user, i.e., a human or a machine performs perception, i.e., the receiving target of an image (or the purpose of an image, etc.) and a method for expressing the suitable usage and attribute of a coded bitstream. Below, a coding optimization method, a method for expressing the suitable usage and attribute of a coded bitstream, signaling of information about a coding optimization method, etc. are described through various embodiments. According to the present disclosure, it may be determined whether a coding video and the video use purpose of a receiving target (e.g., a user (human) or a machine) are consistent with an optimization method applied to an encoded picture, which may be utilized for a receiving target (e.g., a user or a machine, etc.) to select and request a coding video suitable for a purpose, thereby improving system efficiency, quality of a reconstructed picture and performance.

Meanwhile, the name of a syntax or the name of an NAL unit used when describing the embodiment of the present disclosure in detail below is arbitrarily determined for clarity of a description, and the present disclosure is not limited thereto.

Hereinafter, the embodiment of the present disclosure will be described in detail by referring to drawings.

First, a method for signaling information about an optimization method according to an embodiment of the present disclosure is described.

According to an embodiment of the present disclosure, information about an optimization method applied to an image may be signaled by extending and applying an existing NAL unit. As an example, by extending and applying an existing NAL unit, information about an optimization method defined in this embodiment (e.g., encoder_optimization_info, intended_purpose_info, etc.) may be added to an existing NAL unit and signaled. As an example, information about an optimization method may be included in an existing NAL unit and signaled based on at least one of the structures included in an existing NAL unit such as decoding capability information (DCI), video usage information (VUI), a sequence parameter set (SPS), a picture parameter set (PPS), a picture header and/or a slice header, etc. Table 1 below relates to a case in which information about an optimization method is signaled in a picture parameter set, i.e., a PPS according to an embodiment of the present disclosure.

**[Table 1]**

| | |
|---|---|
| picture_parameter_set_rbsp( ) { | **Descriptor** |
| ... | |
| task_info_flag | u(1) |
| if(task_info_flag ) { | |
| encoder_optimization_info( ) | |
| } | |
| ... | |
| } | |

As an example, information about an optimization method may include task information (e.g., task_info_flag) which is information about a task to be performed through an image, optimization information (e.g., encoder_optimization_info) which is information about an optimization method applied on an encoding side and/or image purpose information (e.g., intended_purpose_info) which is information about an image purpose. As an example, information about an optimization method (e.g., encoder_optimization_info and intended_purpose_info) may both be signaled, but only one of the two may be defined and only one of the two may be signaled. As an example, information about an image purpose may be derived based on optimization information or optimization information may be derived based on information about an image purpose. In other words, intended_purpose_info may be derived through encoder_optimization_info, and vice versa. As an example, optimization information and/or image purpose information, etc. may be signaled based on task information (task_info_flag). For example, when the value of task information is a specific value (e.g., 1), optimization information (e.g., encoder_optimization_info) or image purpose information (e.g., intended_purpose_info) may be defined and signaled, and when the value of task information is a specific value (e.g., 0), optimization information (e.g., encoder_optimization_info) or image purpose information (e.g., intended_purpose_info) may not be defined and signaled.

Meanwhile, the transmission unit of the encoder_optimization_info() and/or Intended_purpose_info is not limited to a picture, and transmission may also be performed in the unit of a higher or lower level. In addition, in this case, the application, persistence, etc. of an image optimization method may be represented for each unit of a higher or lower level than a current picture. For example, a specific video section consisting of a plurality of pictures may be that unit or a part of one picture (e.g., a slice, a tile, a coding unit, etc.) may be that unit.

Meanwhile, as another example, a new NAL unit type may be defined, and information about an optimization method may be signaled by being included in a corresponding NAL unit type. Tables 2 and 3 below represent an example in which Encoder Optimization Information (EOI) NAL unit and Intended Purpose Information (IPI) NAL unit types which are a new NAL unit type are defined respectively according to an embodiment of the present disclosure.

**[Table 2]**

| **nal_unit_type** | **Name of nal_unit_type** | **Content of NAL unit and RBSP syntax structure** | **NAL unit type class** |
|---|---|---|---|
| 26 | EOI_NUT | Machine optimization information | Non-VCL |
| | | encoder_optimization_info () | |

**[Table 3]**

| **nal_unit_type** | **Name of nal_unit_type** | **Content of NAL unit and RBSP syntax structure** | **NAL unit type class** |
|---|---|---|---|
| 26 | IPI NUT | Intended purpose information | Non-VCL |
| | | Intended_purpose_info () | |

As shown in Table 2 or Table 3 above, a new NAL unit may include information about an optimization method (e.g., encoder_optimization_info, intended_purpose_info), etc. However, an index value (e.g., 26) for identifying an NAL unit type class (e.g., non-VCL) and an NAL unit type (e.g., nal_unit_type) described in Table 2 below is an example and may be changed, which is also clearly included in the present disclosure. Referring to Table 2, a new NAL unit type may be defined to express an optimization method and application scope and the purpose and attribute of an encoded picture.

Meanwhile, according to another example of the present disclosure, information about an optimization method (e.g., encoder_optimization_info, Intended_purpose_info, etc.) may be encoded by applying Supplemental Enhancement Information (SEI). Tables 4 and 5 below represent an example of signaling information about an SEI-based optimization method according to an embodiment of the present disclosure (e.g., encoder_optimization_info, Intended_purpose_info, etc.).

**[Table 4]**

| | |
|---|---|
| sei_payload( payloadType, payloadSize ) { | **Descriptor** |
| if( nal_unit_type == PREFIX_SEI_NUT ) | |
| if( payloadType == 0) | |
| ... | |
| else if( payloadType == 204 ) /* Specified in Rec. ITU-T H.274 \| ISO/IEC 23002-7 */ | |
| sample_aspect_ratio_info( payloadSize ) | |
| else if( payloadType == 205 ) | |
| encoder_optimization_info ( payloadSize ) | |
| else /* Specified in Rec. ITU-T H.274 \| ISO/IEC 23002-7 */ | |
| reserved_message( payloadSize ) | |
| else /* nal_unit_type == SUFFIX SEI NUT */ | |
| ... | |
| if( more_data_in_payload( ) ) { | |
| ... | |
| } | |
| } | |

**[Table 5]**

| | |
|---|---|
| sei_payload( payloadType, payloadSize ) { | **Descriptor** |
| if( nal_unit_type == PREFIX_SEI_NUT ) | |
| if( payloadType == 0) | |
| ... | |
| else if( payloadType == 204 ) /* Specified in Rec. ITU-T H.274 \| ISO/IEC 23002-7 */ | |
| sample_aspect_ratio_info( payloadSize ) | |
| else if( payloadType == 205 ) | |
| Intended_purpose_info ( payloadSize ) | |
| else /* Specified in Rec. ITU-T H.274 \| ISO/IEC 23002-7 */ | |
| reserved_message( payloadSize ) | |
| else /* nal_unit_type == SUFFIX SEI NUT */ | |
| ... | |
| if( more_data_in_payload( ) ) { | |
| ... | |
| } | |
| } | |

As shown in Table 3 or Table 4 above, when the value of payloadType is a specific value (e.g., 205), it may represent that an SEI payload representing information about an optimization method (e.g., encoder_optimization_info, Intended_purpose_info) is encoded and signaled. Meanwhile, since Table 3 above is an example, it is obvious that a value for representing that an SEI payload representing information about an optimization method (e.g., encoder_optimization_info, Intended_purpose_info) is encoded and signaled, i.e., the value of payloadType may be determined as an arbitrary number, which is also included in the present disclosure.

Below, optimization-related information that may be included in information about an optimization method (e.g., encoder_optimization_info, intended_purpose_info, etc.) is described. As an embodiment, first, image optimization (application) information (or information on whether image is optimized) representing whether an image is optimized, image optimization (purpose) information representing the intention of optimizing an image, i.e., an optimization purpose and/or image optimization (method) information representing an optimization method applied to an image are described. Tables 6 to 8 below represent an example of the syntax of information about an optimization method.

**[Table 6]**

| | |
|---|---|
| encoder_optimization_info(payloadSize ) { | **Descriptor** |
| **encoder_optimization_flag** | u(1) |
| if(encoder_optimization_flag) { | |
| optimization_for_machine | u(1) |
| if{optimization_for_machine) | |
| machine_optimization_method | u(16) |
| optimization_persistence_flag | u(1) |
| } | |
| else { | |
| human_optimization_method | u(16) |
| optimization_persistence_flag | u(1) |
| } | |
| } | |
| } | |

**[Table 7]**

| | |
|---|---|
| encoder_optimization_info(payloadSize ) { | **Descriptor** |
| **encoder_optimization_flag** | u(1) |
| if(encoder_optimization _flag) { | |
| optimization_for_machine | u(1) |
| if{optimization_for_machine) | |
| machine_optimization_method | u(16) |
| } | |
| else { | |
| human_optimization _method | u(1) |
| } | |
| optimization_persistence_flag | u(1) |
| } | |
| } | |

**[Table 8]**

| | |
|---|---|
| encoder_optimization_info(payloadSize ) { | **Descriptor** |
| **encoder_optimization_flag** | u(1) |
| if(encoder_optimization _flag) { | |
| optimization _method | u(16) |
| optimization_persistence_flag | u(1) |
| } | |
| } | |

Table 6 above may represent an example of a method for expressing whether optimization is applied and an application method and purpose. Tables 6 and 7 may represent an example in which an optimization method and application scope are defined respectively according to an optimization purpose. Table 8 may represent an example in which an optimization method and an application method are defined by integrating an optimization purpose. Referring to Tables 6 to 8 above, optimization-related information, for example, may be signaled by being included in encoder_optimization_info. Since encoder_optimization_info is the same as described above, an overlapping description is omitted.

As an example, optimization-related information may include optimization application information representing whether optimization is applied. As an example, optimization application information (e.g., a first syntax) may be expressed as encoder_optimization_flag, and when the value of a first syntax is a specific value (e.g., 0), it may represent that optimization is not applied, and when there is an optimization method that is pre-applied previously (a block or a picture, etc.), it may represent that a corresponding optimization method is no longer applied, i.e., it is terminated, and when there is no optimization method that is pre-applied previously, it may represent that optimization is not applied currently (a block or a picture, etc.). Meanwhile, when the value of a first syntax (e.g., encoder_optimization_flag) is a specific value (e.g., 1), it may represent that an optimization method is applied, and an applied optimization method may be specified according to optimization-related information including whether machine perception-based optimization is performed (e.g., optimization_for_machine, etc.), an optimization method (e.g., optimization_method), a human perception optimization method (e.g., human_optimization_method, etc.), a machine perception optimization method (e.g., machine_optimization_method, etc.), optimization persistence information (e.g., purpose_persistence_flag and/or optimization_persistence_flag, etc.) and/or optimization persistence cancellation information (e.g., optimization_persistence_cancel_flag, etc.), etc. which may be defined and signaled after a first syntax. Each optimization-related information is described below in detail.

As an example, optimization-related information may include optimization purpose information representing an image optimization purpose. As an example, optimization purpose information (e.g., a second syntax) may be obtained based on another optimization-related information (e.g., a first syntax, etc.). Optimization purpose information may be expressed as, for example, optimization_for_machineor optimization_for_human, etc. As an example, when optimization purpose information is defined as optimization_for_machineand the value of optimization purpose information is a specific value (e.g., 1), it may represent that an optimization purpose is to perform a machine task. As another example, when the value of optimization purpose information is a specific value (e.g., 0), it may represent that an optimization purpose is not to perform a machine task, and as an example, may represent that it is for human perception. Meanwhile, as another example, when a second syntax is defined as optimization_for_human, it may represent that an optimization purpose is for human perception when the value of a second syntax is a specific value (e.g., 1) and may represent that an optimization purpose is to perform a machine task when it is a different value (e.g., 0).

As an example, optimization-related information may include information specifying an image optimization method and purpose. As an example, information specifying an image optimization method and purpose (e.g., a third syntax) may be obtained based on another optimization-related information (e.g., a first syntax and/or a second syntax, etc.). As an example, a third syntax may be expressed as machine_optimization_method and may represent information for identifying an optimization method and purpose for performing a machine task. As an example, an optimization method for performing a machine task may be the same as shown in Table 9 below.

**[Table 9]**

| **Value** | **Interpretation** |
|---|---|
| machine_optimization_method == 0 | May be used as determined by the application |
| machine_optimization_method > 0 && ( machine_optimization_method & 0x01 ) == 0 | No pre-processing methods of ROI |
| ( machine_optimization_method & 0x01 ) != 0 | With pre-processing methods of ROI |
| machine _optimization_method > 0 && ( machine_optimization_method & 0x02 ) == 0 | No pre-processing methods of foreground and background |
| ( machine_optimization_method & 0x02 ) != 0 | With pre-processing methods of foreground and background |
| machine _optimization_method > 0 && ( machine_optimization_method & 0x04 ) == 0 | No temporal subsampling |
| ( machine_optimization_method & 0x04 ) != 0 | With temporal subsampling |
| machine _optimization_method > 0 && ( machine_optimization_method & 0x08 ) == 0 | No spatial subsampling |
| ( machine_optimization_method & 0x08 ) != 0 | With spatial subsampling |
| machine _optimization_method > 0 && ( machine_optimization_method & 0x10 ) == 0 | No quantization parameter adaption for Region of Interest coding |
| ( machine_optimization_method & 0x10 ) != 0 | With quantization parameter adaption for Region of Interest coding |
| machine _optimization_method > 0 && ( machine_optimization_method & 0x20 ) == 0 | No quantization step changes for temporal layers |
| ( machine_optimization_method & 0x20 ) != 0 | With quantization step changes for temporal layers |
| ( machine_optimization_method & 0x40 ) == 0 | Optimization methods may be unsuitable for human viewing. |
| ( machine_optimization_method & 0x40 ) != 0 | Can be used for human viewing purposes. |

An optimization method and purpose defined in Table 9 are an example, and a condition for distinguishing between an optimization method and purpose is also just an example. In addition, it is obvious that a third syntax may identify an optimization method and purpose for performing a machine task by including only some arbitrary methods without including all optimization methods defined in Table 9 or may identify an optimization method including other optimization methods not defined in Table 9, which is also included in the embodiment of the present disclosure. As an example, a third syntax may identify an image optimization method and purpose by including an optimization method and purpose defined in a table. Meanwhile, in Table 9, in case of (machine_optimization_method & 0x40) == 0, it may represent that an applied optimization method may be unsuitable for human perception, and for example, it may include a case in which partial information is removed through optimization, making it unsuitable for viewing. Meanwhile, a condition for distinguishing between an optimization method and purpose in a table, e.g., 0x40 is an example, and its value may be defined differently according to the type, number, etc. of optimization methods defined. As an example, in Table 9, in case of (machine_optimization_method & 0x40) != 0, it may represent that an applied optimization method may be used for human perception.

Meanwhile, as an example, optimization-related information may include information specifying an image optimization method and purpose. As an example, information specifying an image optimization method and purpose (e.g., human_optimization_method, a fourth syntax) may be obtained based on another optimization-related information (e.g., the 1st syntax and/or the 2nd syntax, etc.). A fourth syntax human_optimization_method may be information for identifying an optimization method and purpose for human viewing, i.e., human perception. As an example, an optimization method for human perception may be the same as shown in Table 10 below.

**[Table 10]**

| **Value** | **Interpretation** |
|---|---|
| human_optimization_method == 0 | May be used as determined by the application |
| human_optimization_method >0 && ( human_optimization_method & 0x01) == 0 | No general visual quality improvement |
| ( human_optimization_method & 0x01 ) != 0 | With general visual quality improvement |
| human_optimization_method >0 && ( human_optimization_method & 0x02 ) == 0 | No chroma upsampling (from the 4:2:0 chroma format to the 4:2:2 or 4:4:4 chroma format, or from the 4:2:2 chroma format to the 4:4:4 chroma format) |
| ( human_optimization_method & 0x02 ) != 0 | With chroma upsampling |
| human_optimization_method >0 && ( human_optimization_method & 0x04 ) == 0 | No resolution upsampling (increasing the width or height) |
| ( human_optimization_method & 0x04 ) != 0 | With resolution upsampling |
| human_optimization_method >0 && ( human_optimization_method & 0x08 ) == 0 | No picture rate upsampling |
| ( human_optimization_method & 0x08 ) != 0 | With picture rate upsampling |
| human_optimization_method >0 && ( human_optimization_method & 0x10 ) == 0 | No bit depth upsampling (increasing the luma bit depth or the chroma bit depth) |
| ( human_optimization_method & 0x10 ) != 0 | With bit depth upsampling |
| human_optimization_method >0 && ( human_optimization_method & 0x20 ) == 0 | No colourization (from the 4:0:0 chroma format to the 4:2:0, 4:2:2, or 4:4:4 chroma format) |
| ( human_optimization_method & 0x20 ) != 0 | With colourization |
| (human_optimization_method & 0x40 ) == 0 | May be unsuitable for performing machine tasks. |
| ( human_optimization_method & 0x40 ) != 0 | Can be used for machine tasks. |

As an example, a fourth syntax may identify an optimization method and purpose defined in Table 10. Meanwhile, an optimization method defined in Table 10 is an example, and an optimization method and purpose may be defined by using a corresponding structure. An optimization method and purpose defined in Table 10 are an example, and a condition for distinguishing between an optimization method and purpose is also just an example. In addition, it is obvious that a fourth syntax may identify an optimization method and purpose for human perception by including only some arbitrary methods without including all optimization methods defined in Table 10 or may identify an optimization method including other optimization methods not defined in Table 10, which is also included in the embodiment of the present disclosure. As an example, a fourth syntax may identify an image optimization method and purpose by including an optimization method and purpose defined in a table. Meanwhile, as an example, in Table 10, in case of (human_optimization_method & 0x40) == 0, it may correspond to a case in which an applied optimization method may be unsuitable for a machine task, i.e., for example, when partial information is changed through optimization. Meanwhile, in Table 10, 0x40 is an example, and its value may be defined differently according to the type, number, etc. of optimization methods defined. In Table 10, in case of (human_optimization_method & 0x40) != 0, it may represent that an applied optimization method may also be used for performing a machine task. Meanwhile, as an example, optimization-related information may include information for identifying an image optimization method. As an example, information for identifying an image optimization method (e.g., a fifth syntax) may be obtained based on another optimization-related information (e.g., the 1st syntax, etc.). As an example, a fifth syntax optimization_method may represent information for identifying an optimization method. As an example, a fifth syntax may define an optimization method by including all optimization purposes such as machine task performance, human perception, etc. As an example, Table 11 below is intended to describe an example of an optimization method that may be identified by a fifth syntax.

**[Table 11]**

| **Value** | **Interpretation** |
|---|---|
| optimization_method == 0 | May be used as determined by the application |
| optimization_method > 0 && ( optimization_method & 0x01 ) == 0 | No pre-processing methods of ROI |
| ( optimization_method & 0x01 ) != 0 | With pre-processing methods of ROI |
| optimization_method > 0 && ( optimization_method & 0x02 ) == 0 | No pre-processing methods of foreground and background |
| ( optimization_method & 0x02 ) != 0 | With pre-processing methods of foreground and background |
| optimization_method > 0 && ( optimization_method & 0x04 ) == 0 | No temporal subsampling |
| ( optimization_method & 0x04 ) != 0 | With temporal subsampling |
| optimization_method > 0 && ( optimization_method & 0x08 ) == 0 | No spatial subsampling |
| ( optimization_method & 0x08 ) != 0 | With spatial subsampling |
| optimization_method > 0 && ( optimization_method & 0x10) == 0 | No quantization parameter adaption for Region of Interest coding |
| ( optimization_method & 0x10 ) != 0 | With quantization parameter adaption for Region of Interest coding |
| optimization_method > 0 && ( optimization_method & 0x20 ) == 0 | No quantization step changes for temporal layers |
| ( optimization_method & 0x20 ) != 0 | With quantization step changes for temporal layers |
| (optimization method & 0x40 ) == 0 | May be unsuitable for performing machine tasks. |
| (optimization_method & 0x40 ) != 0 | Can be used for machine tasks. |
| ( optimization_method & 0x100 ) == 0 | Optimization methods may be unsuitable for human viewing. |
| ( optimization_method & 0x100 ) != 0 | Can be used for human viewing purposes. |

An optimization method and purpose defined in Table 11 are an example, and a condition for distinguishing between an optimization method and purpose is also just an example. In addition, it is obvious that a fifth syntax may identify an optimization method and purpose for human perception and/or machine task performance by including only some arbitrary methods without including all optimization methods defined in Table 11 or may identify an optimization method including other optimization methods not defined in Table 11, which is also included in the embodiment of the present disclosure. As an example, a fifth syntax may identify an image optimization method and purpose by including an optimization method and purpose defined in a table. As an example, in Table 11 above, in case of (optimization _method & 0x40) == 0, it may represent that an applied optimization method may be unsuitable for a machine task, and for example, it may correspond to a case in which partial information is changed through optimization. Meanwhile, 0x40 as a condition in Table 11 is an example, and its value may be defined differently according to the type, number, etc. of optimization methods defined. As an example, in case of (optimization _method & 0x100) != 0, it may represent that an applied optimization method may be used for human perception. As another example, in case of (optimization_method & 0x100) == 0, it may represent that an applied optimization method may be unsuitable for human perception, and for example, it may correspond to a case in which partial information is removed through optimization, making it unsuitable for viewing. In Table 11, 0x100 is an example, and its value may be defined differently according to the type, number, etc. of optimization methods defined.

Meanwhile, as an example, optimization-related information may include information for the persistence of an image optimization method. As an example, information for the persistence of an image optimization method (e.g., a sixth syntax) may be obtained based on another optimization-related information (e.g., the 1st syntax, etc.). As an example, a sixth syntax optimization_persistence_flag may represent information for the persistence of an optimization method. As an example, when the value of a sixth syntax is a specific value (e.g., 0), it may represent that an optimization method is applied only to a current picture. Alternatively, when the value of a sixth syntax is a specific value (e.g., 1), an optimization method may also be applied to other pictures following a current picture. In other words, an optimization method may persist.

Meanwhile, unlike an embodiment described above, information representing whether an applied image optimization method is suitable for performing a machine task (e.g., not_optimal_for_machine_analysis_flag, optimization_for_machine_analaysis_flag, etc.) and information representing whether an applied image optimization method is suitable for human perception (e.g., human viewing, human viewing, etc.) (e.g., not_optimal_for_human_viewing_flag, optimization_for_human_viewing_flag, etc.) may be defined separately. As shown in an embodiment described above, an image optimization method and the constraint information of use according to the application of optimization may be defined as one syntax, but according to another embodiment of the present disclosure, since the attributes of two pieces of information may be different, they may be defined as an independent syntax.

Below, optimization-related information that may be included in information about an optimization method (e.g., encoder_optimization_info, intended_purpose_info, etc.) is described. Meanwhile, a description that overlaps with the contents described above among the optimization-related information that may be included is omitted. Tables 12 to 16 below represent an example of the syntax of information about an optimization method.

**[Table 12]**

| | |
|---|---|
| encoder_optimization_info(payloadSize ) { | **Dscriptor** |
| **encoder_optimization_flag** | u(1) |
| if(encoder_optimization _flag) { | |
| optimization_for_machine | u(1) |
| if{optimization_for_machine) | |
| machine_optimization_method | u(16) |
| not_optimal_for_human_viewing_flag | u(1) |
| optimization_persistence_flag | u(1) |
| } | |
| else { | |
| human_optimization_method | u(16) |
| not_optimal_for_machine_analysis_flag | u(1) |
| optimization_persistence_flag | u(1) |
| } | |
| } | |
| } | |

**[Table 13]**

| | |
|---|---|
| encoder_optimization_info(payloadSize ) { | **Descriptor** |
| **encoder_optimization_flag** | u(1) |
| if(encoder_optimization _flag) { | |
| optimization_for_machine | u(1) |
| if{optimization_for_machine) | |
| machine_optimization_method | u(16) |
| not_optimal_for_human_viewing_flag | u(1) |
| } | |
| else { | |
| human_optimization_method | u(16) |
| not-_optimal_for_machine_analysis_flag | u(1) |
| } | |
| optimization_persistence_flag | u(1) |
| } | |
| } | |

**[Table 14]**

| | |
|---|---|
| encoder_optimization_info(payloadSize ) { | **Descriptor** |
| **encoder_optimization_flag** | u(1) |
| if(encoder_optimization _flag) { | |
| not_optimal_for_human_viewing_flag | u(1) |
| not_optimal_for_machine_analysis_flag | u(1) |
| optimization_method | |
| optimization_persistence_flag | u(1) |
| } | |
| } | |

**[Table 15]**

| | |
|---|---|
| encoder_optimization_info(payloadSize ) { | **Descriptor** |
| **encoder_optimization_flag** | u(1) |
| if(encoder_optimization _flag) { | |
| not_optimal_for_machine_analysis_flag | u(1) |
| optimization_persistence_flag | u(1) |
| optimization_method | u(16) |
| } | |
| } | |

**[Table 16]**

| | |
|---|---|
| encoder_optimization_info(payloadSize ) { | **Descriptor** |
| **encoder_optimization_flag** | u(1) |
| if(encoder_optimization_flag) { | |
| not_optimal_for_human_viewing_flag | u(1) |
| optimization_persistence_flag | u(1) |
| optimization_method | u(16) |
| } | |
| } | |

Tables 12 to 16 above may represent an example of a method for expressing whether optimization is applied and an application method and purpose. More specifically, according to the examples of Tables 12 and 13 above, an optimization method and application scope, machine task suitability and human perception suitability may be defined according to an image optimization purpose. More specifically, according to the example of Table 14 above, an optimization method and application scope, machine task suitability and human perception suitability may be expressed by integrating optimization purposes. According to the examples of Tables 15 and 16 above, machine task suitability and human perception suitability may be defined, respectively. Meanwhile, in another embodiment, since information about machine task suitability and information about human perception suitability may be mutually exclusive, two pieces of information may not be defined.

Among the Tables 12 to 16 above, since the description of the 1st syntax (e.g., encoder_optimization_flag), the 2nd syntax (e.g., optimization_for_machineand/or optimization_for_human), a third syntax (e.g., machine_optimization_method), a fourth syntax (e.g., human_optimization_method), a fifth syntax (e.g., optimization_method) and/or a sixth syntax (e.g., optimization_persistence_flag) is the same as described above, an overlapping description is omitted.

Meanwhile, as an example, optimization-related information may include information related to an image optimization purpose, i.e., intention. As an example, information related to an image optimization method (e.g., a seventh syntax) may be obtained based on another optimization-related information (e.g., the 2nd syntax, etc.). As an example, a seventh syntax may be expressed as not_optimal_for_machine_analysis_flag. As an example, a seventh syntax may be defined when the value of the 2nd syntax (e.g., optimization_for_machine) is a specific value (e.g., 0), i.e., when an optimization purpose is human perception (e.g., human viewing, human viewing, etc.), etc. When the value of a seventh syntax is a specific value (e.g., 1), it represents that a picture encoded/decoded by applying an optimization method identified by human_optimization_method may not be suitable for performing a machine task. When the value is 0, it may represent that a picture coded by applying optimization based on an optimization method identified by another syntax (e.g., a fourth syntax, human_optimization_method) may also be used for a machine task.

Meanwhile, as an example, optimization-related information may include information related to an image optimization purpose, i.e., intention. As an example, information related to an image optimization method (e.g., a eighth syntax) may be obtained based on another optimization-related information (e.g., the 2nd syntax, etc.). As an example, a eighth syntax may be expressed as not_optimal_for_human_viewing_flag. As an example, a eighth syntax not_optimal_for_human_viewing_flag may be defined when the value of another syntax (e.g., the 2nd syntax optimization_for_machine) is a specific value (e.g., 1), i.e., when an optimization purpose is to perform a machine task. As an example, when the value of a eighth syntax not_optimal_for_human_viewing_flag is a specific value (e.g., 1), it may represent that a picture coded by applying an optimization method identified by another syntax (e.g., a third syntax machine_optimization_method) may not be suitable for human perception (e.g., human viewing, etc.), etc. As another example, when the value is a specific value (e.g., 0), it may represent that a picture coded by applying optimization based on an optimization method identified by another syntax (e.g., a third syntax machine_optimization_method) may be used for human perception (e.g., human viewing, etc.), etc.

Meanwhile, as an embodiment of the present disclosure, when identifying an optimization method based on a third syntax, it may be based on Table 9, but a case of ( machine_optimization_method & 0x40 ) == 0(Optimization methods may be unsuitable for human viewing) or ( machine_optimization_method & 0x40 ) != 0(Can be used for human viewing purposes) may be excluded.

Meanwhile, as an embodiment of the present disclosure, when identifying an optimization method based on a fourth syntax, it may be based on Table 10, but a case of (human_optimization_method & 0x40 ) == 0 (May be unsuitable for performing machine tasks) or ( human_optimization_method & 0x40 ) != 0(Can be used for machine tasks) may be excluded.

Meanwhile, as an embodiment of the present disclosure, when identifying an optimization method based on a fifth syntax, it may be based on Table 11, but a case of (optimization_method & 0x40 ) == 0(May be unsuitable for performing machine tasks), (optimization_method & 0x40 ) != 0(Can be used for machine tasks), ( optimization_method & 0x100 ) == 0(Optimization methods may be unsuitable for human viewing), ( optimization_method & 0x100 ) != 0(Can be used for human viewing purposes) may be excluded.

Meanwhile, picture (image) information may be changed through an image optimization process. For example, specific information about an image may be removed or reduced, while specific information may be improved and added. This information change may affect a task to be performed by a user, i.e., a human or a machine, i.e., a machine. Accordingly, it is necessary to specify the impact of such image optimization on task performance. In addition, considering that an image optimization method may be modified and added, it may be necessary to define information about the impact of optimization rather than information about an optimization method. The following embodiment describes in detail information about the impact of image optimization that may be included in information related to image optimization. The example of information about the impact of image optimization is described by referring to Tables 17 and 18.

**[Table 17]**

| | |
|---|---|
| encoder_optimization _info(payloadSize ) { | **Descriptor** |
| **encoder_optimization_flag** | u(1) |
| if(encoder_optimization _flag) { | |
| optimization_persistence_flag | u(1) |
| optimization_purpose | u(16) |
| } | |
| } | |

**[Table 18]**

| **Value** | **Interpretation** |
|---|---|
| optimization_purpose == 0 | May be used as determined by the application |
| optimization_purpose > 0 && ( optimization_purpose & 0x01 ) == 0 | The intended purpose of the optimization does not include human viewing. |
| ( optimization purpose & 0x01 ) != 0 | The intended purpose of the optimization includes human viewing. |
| optimization_purpose > 0 && ( optimization purpose & 0x02 ) == 0 | The intended purpose of the optimization does not include machine analysis. |
| ( optimization_purpose & 0x02 ) != 0 | The intended purpose of the optimization includes machine analysis. |
| optimization_purpose > 0 && ( optimization_purpose & 0x04 ) == 0 | The intended purpose of the optimization does not include machine analysis that requires identification of personal information |
| ( optimization_purpose & 0x04 ) != 0 | The intended purpose of the optimization includes machine analysis that requires identification of personal information |
| optimization_purpose > 0 && ( optimization_purpose & 0x08 ) == 0 | The intended purpose of the optimization does not include human viewing that requires identification of personal information |
| ( optimization_purpose & 0x08 ) != 0 | The intended purpose of the optimization includes human viewing that requires identification of personal information |
| optimization_purpose > 0 && ( optimization_purpose & 0x10) == 0 | The intended purpose of the optimization does not include machine analysis that related to safety. |
| ( optimization_purpose & 0x10 ) != 0 | The intended purpose of the optimization includes machine analysis that related to safety. |
| optimization_purpose > 0 && ( optimization_purpose & 0x20 ) == 0 | The intended purpose of the optimization does not include human viewing that related to safety. |
| ( optimization_purpose & 0x20 ) != 0 | The intended purpose of the optimization include human viewing that related to safety. |
| optimization_purpose > 0 && (optimization_purpose & 0x40 ) == 0 | The intended purpose of the optimization do not include machine analysis that related to security. |
| optimization_pyrpose > 0 && (optimization_purpose & 0x40 ) != 0 | The intended purpose of the optimization include machine analysis that related to security. |
| optimization_pyrpose > 0 && ( optimization_pyrpose & 0x100 ) == 0 | The intended purpose of the optimization do not include human viewing that related to security. |
| optimization_pyrpose > 0 && ( optimization_pyrpose & 0x100 ) != 0 | The intended purpose of the optimization include human viewing that related to security. |

Table 17 above represents an example of a method for expressing an image optimization purpose, impact and application scope according to an embodiment of the present disclosure, and Table 18 represents an example of a method for expressing an image optimization purpose and impact.

Meanwhile, when describing an embodiment of the present disclosure by referring to Table 17 above, the description of the 1st syntax (e.g., encoder _optimization_flag) and a sixth syntax (optimization_persistence_flag) is the same as described above, so an overlapping description is omitted.

Meanwhile, image optimization-related information may include information about an image optimization purpose. Information about an image optimization purpose may be expressed as optimization_purpose, and may be signaled based on other syntaxes including information about whether an image is optimized (e.g., the 1st syntax). As an example, a nineth syntax optimization_pyrpose may be information about the purpose of image optimization and the impact of image optimization. As an example, a nineth syntax may represent for what purpose and by what optimization method information included in a bitstream encoded by applying image optimization is changed. Meanwhile, referring to an example in Table 18, "optimization_purpose > 0 && (optimization_purpose & 0x04) != 0" may mean that an applied optimization method does not affect the identification of personal information. In addition, "optimization_purpose > 0 && (optimization_purpose & 0x04)= = 0" may mean that an applied optimization method affects the identification of personal information. In this case, personal information may be removed or changed in an image optimization process due to a personal information problem. In this case, it may be processed in machine analysis, etc. related to personal information identification. Meanwhile, as another example, "optimization_purpose > 0 && (optimization_purpose & 0x10) ! = 0" may mean that an applied optimization method does not affect security and/or safety-related information. As an example, when some areas within an image are identified as an unnecessary area and changed, for example, when the information of a background area such as a road or a facility is removed or changed, some tasks that need this information may need care such as further referring to another bitstream, further referring to another syntax or processing another additional process when processing a corresponding bitstream. Meanwhile, as another example, "optimization_purpose > 0 && (optimization_purpose & 0x40) != 0" may mean that an optimization method does not affect security-related information. Meanwhile, Table 18 is an example representing the purpose and impact of image optimization, and may be configured by identifying the purpose and impact of image optimization by including only some arbitrary cases without including all cases defined in Table 18 or by including other purposes and impacts of optimization not defined in Table 18, which is also included in the present disclosure.

Meanwhile, in a specific case, from the perspective of a user, i.e., a human or a machine, i.e., a machine, it may be necessary to determine whether a coding video is consistent with a task to be performed, i.e., is consistent with the purpose of use instead of an applied encoding and optimization method. The following embodiment describes in detail information about the purpose of image optimization that may be included in information related to image optimization. The example of information about the purpose of image optimization is described by referring to Tables 19 and 21.

**[Table 19]**

| | |
|---|---|
| Intended_purpose_info(payloadSize ) { | **Descriptor** |
| **purpose_oriented_encoding_flag** | u(1) |
| if(purpose_orientedencoding_flag){ | |
| purpose_persistence_flag | u(1) |
| **intended_purpose** | u(16) |
| } | |
| } | |

**[Table 20]**

| **Value** | **Interpretation** |
|---|---|
| intended_purpose == 0 | May be used as determined by the application |
| intended_purpose > 0 && ( intended_purpose & 0x01 ) == 0 | The intended purpose of the picture do not include human viewing. |
| ( intended_purpose & 0x01 ) != 0 | The intended purposes of the picture include human viewing. |
| intended_purpose > 0 && ( intended_purpose & 0x02 ) == 0 | The intended purposes of the picture do not include machine analysis. |
| ( intended_purpose & 0x02 ) != 0 | The intended purposes of the picture include machine analysis. |
| intended_purpose > 0 && ( intended_purpose & 0x04 ) == 0 | The intended purposes of the picture do not include machine analysis that requires identification of personal information |
| ( intended_purpose & 0x04 ) != 0 | The intended purposes of the picture include machine analysis that requires identification of personal information |
| intended_purpose > 0 && ( intended_purpose & 0x08 ) == 0 | The intended purposes of the picture do not include human viewing that requires identification of personal information |
| ( intended_purpose & 0x08 ) != 0 | The intended purposes of the picture include human viewing that requires identification of personal information |
| intended_purpose > 0 && ( intended_purpose & 0x10) == 0 | The intended purposes of the picture do not include machine analysis that related to safety. |
| ( intended_purpose & 0x10 ) != 0 | The intended purposes of the picture include machine analysis that related to safety. |
| intended_purpose > 0 && ( intended_purpose & 0x20 ) == 0 | The intended purposes of the picture do not include human viewing that related to safety. |
| ( intended_purpose & 0x20 ) != 0 | The intended purposes of the picture include human viewing that related to safety. |
| intended purpose > 0 && (intended_purpose & 0x40 ) == 0 | The intended purposes of the picture do not include machine analysis that related to security. |
| intended_purpose > 0 && (intended_purpose & 0x40 ) != 0 | The intended purposes of the picture include machine analysis that related to security. |
| intended_purpose > 0 && ( intended_purpose & 0x100 ) == 0 | The intended purposes of the picture do not include human viewing that related to security. |
| intended_purpose > 0 && ( intended_purpose & 0x100 ) != 0 | The intended purposes of the picture include human viewing that related to security. |

**[Table 21]**

| **Value** | **Interpretation** |
|---|---|
| intended_purpose = = 0 | May be used as determined by the application |
| intended_purpose> 0 && ( intended_purpose& 0x01 ) == 0 | The intended purpose of the optimization do not include object detection . |
| ( optimization_purpose & 0x01 ) != 0 | The intended purpose of the optimization include object detection. |
| optimization_purpose > 0 && ( optimization purpose & 0x02 ) == 0 | The intended purpose of the optimization do not include object tracking. |
| ( intended_purpose& 0x02 ) != 0 | The intended purpose of the optimization include object tracking. |
| intended_purpose> 0 && ( intended_purpose& 0x04 ) == 0 | The intended purpose of the optimization do not include object segmentation |
| ( intended_purpose& 0x04 ) != 0 | The intended purpose of the optimization include object segmentation |
| intended_purpose> 0 && ( intended_purpose& 0x08 ) == 0 | The intended purpose of the optimization do not include face recognition |
| ( intended_purpose& 0x08 ) != 0 | The intended purpose of the optimization include face recognition |
| intended_purpose > 0 && ( intended_purpose & 0x10) == 0 | The intended purpose of the picture do not include human viewing. |
| ( intended_purpose & 0x10 ) != 0 | The intended purposes of the picture include human viewing. |
| intended_purpose > 0 && ( intended_purpose & 0x20 ) == 0 | The intended purposes of the picture do not include machine analysis. |
| ( intended_purpose & 0x20 ) != 0 | The intended purposes of the picture include machine analysis. |

Table 19 above is an example of information expressing the optimization intention and application scope of a coded image according to an embodiment of the present disclosure, and Tables 20 and 21 above are an example of information expressing the image optimization intention and purpose of a coded image.

First, referring to Table 19, image optimization-related information may include information about the intention and application scope of image optimization and information about whether coding is configured for a specific purpose. As an example, information representing whether a coding configuration for a specific purpose is applied when coding an image may be expressed as purpose_oriented_encoding_flag and referred to as a tenth syntax. When the value of a tenth syntax purpose_oriented_encoding_flag is a specific value (e.g., 0), it may represent that a coding configuration for a specific purpose (e.g., encoder configuration, encoder optimization) is not applied when a corresponding image is coded. In an example, in addition, when the value of a tenth syntax is a specific value (e.g., 0), it may also represent that when there is a configuration for a specific purpose that is previously applied to an image, a corresponding configuration is terminated. Meanwhile, when the value of a tenth syntax is a specific value (e.g., 1), it may represent that a specific coding configuration for a specific purpose exists and may represent that a coding configuration according to another image optimization-related information defined subsequently is being applied. As an example, a coding configuration may be expressed by another syntax to be described below (e.g., purpose_persistence_flag, intended_purpose, etc.).

As an example, information about the intention and application scope of image optimization may include information about the persistence of an image optimization purpose. As an example, information for the persistence of an image optimization purpose (e.g., a eleventh syntax) may be obtained based on another optimization-related information (e.g., a tenth syntax, etc.). Information about the persistence of an image optimization purpose may be expressed, for example, as a purpose_persistence_flag syntax. As an example, a eleventh syntax purpose _persistence_flag may represent information about the persistence of an image optimization purpose. As an example, when the value of a eleventh syntax is a specific value (e.g., 0), it may represent that the persistence of an optimization purpose is terminated. Alternatively, when the value of a eleventh syntax is a specific value (e.g., 1), it may also represent that an optimization purpose persists for other pictures following a current picture.

As an example, information about the intention and application scope of image optimization may include information about an image optimization purpose. As an example, information about an image optimization purpose (e.g., a twelfth syntax) may be obtained based on another optimization-related information (e.g., a tenth syntax, etc.). Information about an image optimization purpose may be expressed, for example, as an intended_purpose syntax. As an example, a twelfth syntax intended_purpose represents the purpose of an encoded image and may represent whether it is suitable or unsuitable for a specific purpose. Meanwhile, Tables 20 and 21 are an example in which the attribute of an image and a performable task are integrated and expressed, and in Table 20, "intended_purpose > 0 && (intended_purpose & 0x04) = = 0" may mean that the use purpose of an image does not include the identification of personal information. In addition, in Table 20, "intended_purpose > 0 && (intended_purpose & 0x04) ! = 0" may mean that the use purpose of an image includes the identification of personal information. As an example, in Table 20, "intended_purpose > 0 && (intended_purpose & 0x10) = = 0" may mean that the use purpose of an image does not include security or safety-related information. In addition, Tables 20 and 21 are just an example, and of course, may be configured by identifying whether it is suitable or unsuitable for a specific purpose and a task by including only some arbitrary cases without including all cases defined in each table or by including other purposes and tasks not defined in Tables 20 and 21.

Meanwhile, image optimization-related information may include information about the attribute of an image. In other words, the attribute of an image (e.g., a pixel value, a partitioning method, etc.) may be changed due to image optimization, and information about a changed image attribute may be necessary to represent the purpose, intention, use, etc. of image optimization. Tables 22 and 23 below are a table for representing information about the attribute of an image according to an embodiment of the present disclosure.

**[Table 22]**

| | |
|---|---|
| Intended_purpose_info(payloadSize ) { | **Descriptor** |
| **purpose_oriented_encoding_flag** | u(1) |
| if(purpose_oriented_encoding_flag){ | |
| purpose_persistence_flag | u(1) |
| **intended_purpose** | u(16) |
| } | |
| } | |

**[Table 23]**

| **Value** | **Interpretation** |
|---|---|
| picture_characteristics == 0 | May be used as determined by the application |
| picture_characteristics > 0 && ( picture_characteristics & 0x01 ) == 0 | The picture can be used for machine analysis. |
| ( picture_characteristics & 0x01 ) != 0 | The picture cannot be used for machine analysis. |
| picture_characteristics > 0 && ( picture_characteristics & 0x02 ) == 0 | The picture can be used for human viewing |
| ( picture_characteristics & 0x02 ) != 0 | The picture cannot be used for human viewing |
| picture_characteristics > 0 && ( picture_characteristics & 0x04 ) == 0 | There may be removal or reduction of certain information in the picture. |
| ( picture_characteristics & 0x04 ) != 0 | There may be no removal or reduction of any information in the picture |
| picture_characteristics > 0 && ( picture_characteristics & 0x08 ) == 0 | There may be enhancement of certain information in the picture. |
| ( picture_characteristics & 0x08 ) != 0 | There may be no enhancement of certain information in the picture. |
| picture_characteristics > 0 && ( picture_characteristics & 0x10) == 0 | There may be change in the semantic information of the picture. |
| ( picture_characteristics & 0x10 ) != 0 | There may be no change in the semantic information of the picture. |

Table 22 above is a table representing information about an image attribute according to an embodiment of the present disclosure, and Table 23 is a table representing a changed image attribute according to an embodiment of the present disclosure.

First, the description of the 1st syntax (e.g., encoder _optimization_flag) and a sixth syntax (e.g., optimization_persistence_flag) is the same as described above, so an overlapping description is omitted.

Meanwhile, image optimization-related information may include information about an image attribute, and information about an image attribute may be signaled based on another syntax (e.g., the 1st syntax, etc.). As an example, information about an image attribute may be referred to as picture_characteristics. A thirteenth syntax picture_characteristics may represent the attribute of an image changed by applying image optimization, and may represent a change in an image attribute as shown in Table 22. However, since Table 22 is just an example, a change in an image attribute may also be identified by including only some arbitrary cases without including all cases defined in Table 22 and other attributes not defined in Table 22 may be further identified, which is also included in the present disclosure.

Meanwhile, information about the purpose, attribute and/or application scope of image optimization that may be included in image optimization-related information according to another embodiment of the present disclosure is described based on Tables 24 to 26.

**[Table 24]**

| | |
|---|---|
| encoder_optimization_info(payloadSize ) { | **Descriptor** |
| **optimization_cancel_flag** | u(1) |
| if(!optimization_cancel_flag){ | |
| **optimization_persistence_flag** | u(1) |
| **optimization_for_machine_analysis_flag** | u(1) |
| **optimization_type** | u(16) |
| } | |
| } | |

**[Table 25]**

| **value** | **Optimization type** |
|---|---|
| 0 | Object-based optimization |
| 1 | Temporal subsampling |
| 2 | Spatial subsampling |
| 3 | Temporal quality optimization |
| 4 | spatial quality optimization |
| ... | ... |

**[Table 26]**

| Value | Interpretation |
|---|---|
| optimization_type == 0 | May be used as determined by the application |
| optimization_type > 0 && ( optimization_type & 0x01 ) == 0 | No object-based optimization |
| ( optimization_type & 0x01 ) != 0 | With object-based optimization |
| optimization_type > 0 && ( optimization_type & 0x02 ) == 0 | No temporal subsampling optimization |
| ( optimization_type & 0x02 ) != 0 | With temporal subsampling optimization |
| optimization_type > 0 && ( optimization_type & 0x04 ) == 0 | No spatial subsampling optimization |
| ( optimization_type & 0x04 ) != 0 | With spatial subsampling optimization |
| optimization_type > 0 && ( optimization_type & 0x08 ) == 0 | No temporal quality optimization |
| ( optimization_type & 0x08 ) != 0 | With temporal quality optimization |
| optimization_type > 0 && ( optimization_type & 0x10) == 0 | No spatial quality optimization |
| ( optimization_type & 0x10 ) != 0 | With spatial quality optimization |

Table 24 above is a table representing an example of information that may be included in image optimization-related information according to an embodiment of the present disclosure, and Tables 25 and 26 are a table representing an example of a method for expressing an image optimization attribute. As an example, image optimization-related information may include information about the persistence of image optimization. As described above, information about the persistence of image optimization may include information about whether image optimization persists (e.g., a sixth syntax) and may also include information about whether image optimization_persistence is cancelled. As an example, information about whether image persistence is cancelled may be expressed as optimization_cancel_flag and may be expressed as a fourteenth syntax. When the value of a fourteenth syntax optimization_cancel_flag is a specific value (e.g., 1), it may represent that the persistence of image optimization that is continuously applied before is cancelled. Meanwhile, when the value of a fourteenth syntax is a specific value (e.g., 0), it may represent that the persistence of another image optimization is not cancelled. In addition, in this case, image optimization-related information may be further signaled, and for example, a sixteenth syntax optimization_persistence_flag, and a fifteenth syntax optimization_for_machine_analysis_flag and a sixteenth syntax optimization type, etc. which will be described below may be defined subsequently. In addition, an image optimization method, purpose and/or application scope, etc. may be identified and applied based on a sixth syntax optimization_persistence_flag, a fifteenth syntax optimization_for_machine_analysis_flag and a sixteenth syntax optimization_type, etc. which are defined subsequently.

Meanwhile, the description of a sixth syntax (e.g., optimization_persistence_flag) among the syntaxes shown in Table 24 is the same as described above, so an overlapping description is omitted. Meanwhile, referring to Table 24, a sixth syntax may be signaled based on another syntax (e.g., a fourteenth syntax optimization_cancel_flag).

As an example, image optimization-related information may include information about the purpose of image optimization. As described above, information about the purpose of image optimization may include information representing the usage and/or purpose of image optimization. As an example, a fifteenth syntax optimization_for_machine_analysis_flag may be included in information about the purpose of image optimization. As an example, when the value of a fifteenth syntax optimization_for_machine_analysis_flag is a specific value (e.g., 1), it may represent that the purpose of image optimization and a coded bitstream are intended for performing a machine task (e.g., machine analysis). In other words, it also may represent that a corresponding bitstream is suitable for performing a machine task. As another example, when the value of a fifteenth syntax is a specific value (e.g., 0), it may represent that an image optimization purpose and a coded bitstream may or may not be for a machine task (it indicates it may / may not be for machine analysis).

As an example, image optimization-related information may include information about the purpose of image optimization. As described above, information about the purpose of image optimization may include information representing the attribute of an image according to image optimization. As an example, a sixteenth syntax optimization_type may be included in information about the attribute of an image. As an example, a sixteenth syntax may identify an optimization attribute defined in Table 25 and/or Table 26. However, an optimization attribute defined in Table 25 and/or Table 26 is just an example, and a new optimization attribute may be defined by using a corresponding structure, which is also included in the present disclosure. In addition, it may be configured by identifying an optimization attribute and method by including only some arbitrary optimization attributes without including optimization attributes defined in Table 25 and/or Table 26 or by including other optimization attributes and methods not defined in Table 25 and/or Table 26, which is also included in the present disclosure.

Meanwhile, in the embodiment of Table 24, a seventh syntax and/or a eighth syntax described above may be signaled instead of a fifteenth syntax. In addition, a seventeenth syntax optimization_for_human_viewing_flag similar to a seventh syntax and/or a eighth syntax may also be signaled. Table 27 below is a table for describing such an embodiment.

**[Table 27]**

| | |
|---|---|
| encoder_optimization_info(payloadSize ) { | **Descriptor** |
| **optimization_cancel_flag** | u(1) |
| if(! optimization_cancel_flag) { | |
| **optimization_persistence_flag** | u(1) |
| **optimization_for_human_viewing_flag** | u(1) |
| **optimization_type** | u(16) |
| } | |
| } | |

As the example of Table 27, a seventeenth syntax may be included in information about the purpose of image optimization, and similar to a seventh syntax and/or a eighth syntax, may be information for identifying whether the purpose of current image optimization is for machine task performance or human perception. As an example, a seventeenth syntax may be signaled based on another syntax (e.g., a fourteenth syntax, etc.), and when the value of a seventeenth syntax is a specific value (e.g., 1), it may represent that the purpose of image optimization and a coded bitstream are for human perception (e.g., human viewing, etc.). As another example, when the value of a seventeenth syntax is a specific value (e.g., 0), an image optimization purpose and a coded bitstream may or may not be for human perception (If the value is '0', it may / may not be for human viewing).

Meanwhile, the description of a fourteenth syntax (e.g., optimization_cancel_flag), a sixth syntax (e.g., optimization_persistence_flag) and a sixteenth syntax (e.g., optimization_type) among the syntaxes shown in Table 27 is the same as described above, so an overlapping description is omitted. Meanwhile, although referring to Table 27, a sixth syntax and/or a sixteenth syntax may be signaled based on another syntax (e.g., a fourteenth syntax optimization_cancel_flag).

In addition, in the embodiment of Table 27, a sixteenth syntax may identify the image optimization methods of Tables 25 and 26.

Meanwhile, as another embodiment, Tables 24 and 27 describe an example in which only one of a fifteenth syntax and a seventeenth syntax is signaled, but as shown in Table 28 below, both a fifteenth syntax and a seventeenth syntax may be signaled.

**[Table 28]**

| | |
|---|---|
| encoder_optimization_info(payloadSize ) { | **Descriptor** |
| **optimization_cancel_flag** | u(1) |
| if(! optimization_cancel_flag) { | |
| **optimization_persistence_flag** | u(1) |
| **optimization_for_human_viewing_flag** | u(1) |
| **optimization_for_machine_analysis_flag** | u(1) |
| **optimization_type** | u(16) |
| } | |
| } | |

However, since Table 28 corresponds to an embodiment of the present disclosure, a fifteenth syntax may be signaled first instead of a seventeenth syntax as shown in Table 28, which is also included in the present disclosure. Such an embodiment may be the same as shown in Table 29 below.

**[Table 29]**

| | |
|---|---|
| encoder_optimization_info(payloadSize ) { | **Descriptor** |
| **optimization_cancel_flag** | u(1) |
| if(! optimization_cancel_flag) { | |
| **optimization_persistence_flag** | u(1) |
| **optimization_for_machine_analysis_flag** | u(1) |
| **optimization_for_human_viewing_flag** | u(1) |
| **optimization_type** | u(16) |
| } | |
| } | |

Since the description of a fourteenth syntax (e.g., optimization_cancel_flag), a sixth syntax (e.g., optimization_persistence_flag), a seventeenth syntax (e.g., optimization_for_human_viewing_flag), a fifteenth syntax (e.g., optimization_for_machine_analysis_flag) and a sixteenth syntax (e.g., optimization_type) which may be included in information related to image optimization disclosed in Table 28 and/or Table 29 above is the same as described above, an overlapping description is omitted. Meanwhile, although referring to Table 28 and/or Table 29, a sixth syntax, a seventeenth syntax, a fifteenth syntax and/or a sixteenth syntax may be signaled based on another syntax (e.g., a fourteenth syntax optimization_cancel_flag). In addition, in the embodiment of Table 28 and/or Table 29, a sixteenth syntax may identify the image optimization methods of Tables 25 and 26. Meanwhile, unlike Table 28 and/or Table 29, a fifteenth syntax may be signaled based on a seventeenth syntax or a seventeenth syntax may be signaled based on a fifteenth syntax. Tables 30 and 31 are a table for describing such an embodiment, respectively.

**[Table 30]**

| | |
|---|---|
| encoder_optimization_info(payloadSize ) { | **Descriptor** |
| **optimization_cancel_flag** | u(1) |
| if(! optimization_cancel_flag) { | |
| **optimization_persistence_flag** | u(1) |
| **optimization_for_human_viewing_flag** | u(1) |
| **if(optimization_for_human_viewing_flag){** | |
| **optimization_for_machine_analysis_flag** | u(1) |
| } | |
| **optimization_type** | u(16) |
| } | |
| } | |

**[Table 31]**

| | |
|---|---|
| encoder_optimization_info(payloadSize ) { | **Descriptor** |
| **optimization_cancel_flag** | u(1) |
| if(!optimization_cancel_flag){ | |
| **optimization_persistence_flag** | u(1) |
| **optimization_for_machine**_**analysis_flag** | u(1) |
| **if(optimization_for_machine**_**analysis_flag){** | |
| **optimization_for_human_viewing_flag** | u(1) |
| } | |
| **optimization_type** | u(16) |
| } | |
| } | |

Since the description of a fourteenth syntax (e.g., optimization_cancel_flag), a sixth syntax (e.g., optimization_persistence_flag), a seventeenth syntax (e.g., optimization_for_human_viewing_flag), a fifteenth syntax (e.g., optimization_for_machine_analysis_flag) and a sixteenth syntax (e.g., optimization_type) which may be included in information related to image optimization disclosed in Table 30 and/or Table 31 above is the same as described above, an overlapping description is omitted. Meanwhile, although referring to Table 30 and/or Table 31, a sixth syntax, a seventeenth syntax, a fifteenth syntax and/or a sixteenth syntax may be signaled based on another syntax (e.g., a fourteenth syntax optimization_cancel_flag). In addition, in the embodiment of Table 30 and/or Table 31, a sixteenth syntax may identify the image optimization methods of Tables 25 and 26.

Meanwhile, in addition to the description of a fifteenth syntax and/or a seventeenth syntax, according to the embodiment of Table 30 and/or Table 31, a fifteenth syntax and a seventeenth syntax may be restricted from simultaneously being a specific value (e.g., 0). For example, according to the embodiment of Table 30, a fifteenth syntax may be signaled based on a seventeenth syntax. For example, when the value of a seventeenth syntax is a specific value (e.g., 0), the value of a fifteenth syntax may not be signaled, and for example, may be derived as a specific value (e.g., 1) on a decoder side. In addition, the value of a fifteenth syntax may also be determined according to the value of a seventeenth syntax on an encoder side. Meanwhile, as shown in Table 31, a seventeenth syntax may be signaled based on a fifteenth syntax. For example, when the value of a fifteenth syntax is a specific value (e.g., 0), the value of a seventeenth syntax may not be signaled, and for example, may be derived as a specific value (e.g., 1) on a decoder side. In addition, the value of a seventeenth syntax may also be determined according to the value of a fifteenth syntax on a decoder side.

Meanwhile, in an embodiment, at least one of the 1st syntax to a seventeenth syntax described above may be signaled in a Supplemental Enhancement Information (SEI) message, etc. For example, an SEI message may include an encoding pre-processing type applied to a picture associated with an SEI message, information about whether image optimization for human perception is applied and/or information about whether image optimization for machine task processing is applied. As an example, when the value of a sixth syntax optimization_persistence_flag which may be included in information about the persistence of image optimization is a specific value (e.g., 1), it may represent that image optimization may persist, and a specific image optimization method may be applied to a current picture and a subsequent picture for the current picture of a current layer in output order until one or more of the following conditions are true:
- When the new coded layer video sequence (CLVS) of a current layer starts
- When a bitstream ends
- When the picture of a current layer associated with an encoder_optimization_info SEI message where optimization_cancel_flag is 1 is output after a current picture in output order

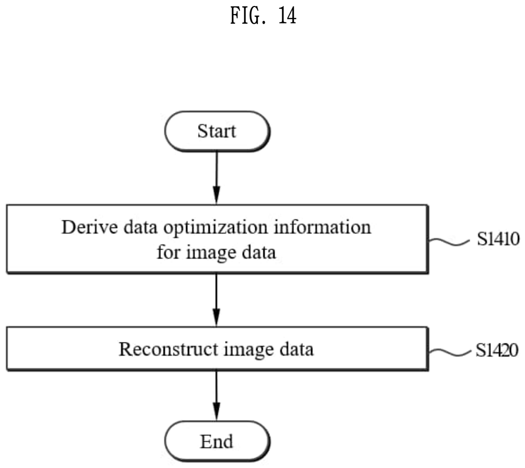

FIG. 14 is a diagram representing an example of a decoding method that may be performed by a decoding apparatus according to an embodiment of the present disclosure. As an example, a decoding apparatus that may perform FIG. 14 may include a data decoding apparatus, and may include an image decoding apparatus, a feature decoding apparatus, etc. described above. In addition, the decoding method of FIG. 14 may be a data decoding method, and may include an image decoding method and a feature decoding method described above. In addition, since the decoding method of FIG. 14 may be based on an embodiment described above, a description that overlaps with the description is omitted.

As an example, data optimization information related to an image data optimization method (or an image data modification method, etc.) according to the purpose of image data may be obtained S1410. As an example, image data or data may include an image, a feature, a feature map, etc. As an example, data optimization information (or data modification information, etc.) related to an image data optimization method may include image optimization-related information (or image modification-related information, etc.) described above, and may include information about an image optimization method (e.g., information about an image modification method, etc.) (e.g., an image optimization method, an image optimization purpose, an image optimization intention, image optimization persistence, etc.), etc. Since each information is the same as described above, an overlapping description is omitted.

Afterwards, image data may be reconstructed S1420 based on obtained data optimization information. In addition, data optimization information may include data optimization application information representing whether image data is optimized for each usage. In addition, data optimization information may include data optimization purpose information representing the optimization purpose of image data. In addition, as an example, data optimization purpose information may include machine task optimization information representing an image data optimization method for performing a machine task. In addition, as an example, data optimization purpose information may include human perception optimization information representing an image data optimization method for human perception. In addition, as an example, human perception optimization information may be obtained based on machine task optimization information. In addition, as an example, machine task optimization information may be obtained based on human perception optimization information. In addition, as an example, data optimization information may include data optimization_persistence information representing the persistence of an image data optimization method, etc. As described above, data optimization persistence information may include persistence maintenance information and/or persistence cancellation information representing whether optimization persistence is cancelled. In addition, as an example, based on persistence cancellation information, at least one of persistence degree information representing an optimization persistence degree, target information representing an optimization purpose target or type information representing an optimization attribute may be obtained. In addition, as an example, data optimization information may be obtained based on information on whether it is optimized, representing whether data is optimized. As an example, information related to image optimization, i.e., data optimization information may be signaled in a bitstream, and for example, information on whether it is optimized may be signaled as a bitstream. As an example, information related to image optimization, e.g., data optimization information may include at least one of the 1st syntax to a eighteenth syntax described above, and may be signaled through an SEI message, etc. as described above, and since other embodiments are the same as described above, an overlapping description is omitted.

Meanwhile, since the decoding method of FIG. 14 corresponds to an embodiment of the present disclosure, the order of some steps may be changed or some steps may be added or deleted, which is also included in the embodiment of the present disclosure, and the name of information, etc. is for the clarity of a description and is not intended to limit the present disclosure.

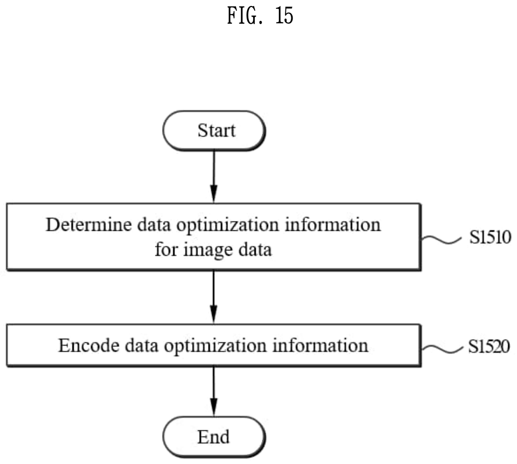

FIG. 15 is a diagram representing an example of an image encoding method that may be performed by an image encoding apparatus according to an embodiment of the present disclosure. As an example, an encoding apparatus that may perform FIG. 15 may include a data encoding apparatus, and may include an image encoding apparatus, a feature encoding apparatus, etc. described above. In addition, the encoding method of FIG. 15 may be a data encoding method, and may include an image encoding method and a feature encoding method described above. In addition, the encoding method of FIG. 15 may be based on an embodiment described above, and a description that overlaps with the description is omitted.

As an example, data optimization information (e.g., data modification method, etc.) related to an image data optimization method according to the purpose of image data (e.g., an image data modification method, etc.) may be determined S1510. In addition, data optimization information may be encoded into a bitstream S1520. As an example, data optimization information may include data optimization application information representing whether image data is optimized for each usage. In addition, image data or data may include an image, a feature, a feature map, etc. As an example, data optimization information (or data modification information, etc.) related to an image data optimization method may include image optimization-related information (or image modification-related information, etc.) described above, and may include information about an image optimization method (e.g., information about an image modification method, etc.) (e.g., an image optimization method, an image optimization purpose, an image optimization intention, image optimization persistence, etc.), etc. Since each information is the same as described above, an overlapping description is omitted.

In addition, data optimization information may include data optimization purpose information representing the optimization purpose of image data. In addition, as an example, data optimization purpose information may include machine task optimization information representing an image data optimization method for performing a machine task. In addition, as an example, data optimization purpose information may include human perception optimization information representing an image data optimization method for human perception. In addition, as an example, human perception optimization information may be obtained based on machine task optimization information. In addition, as an example, machine task optimization information may be obtained based on human perception optimization information. In addition, as an example, data optimization information may include data optimization persistence information representing the persistence of an image data optimization method, etc. As described above, data optimization persistence information may include persistence maintenance information and/or persistence cancellation information representing whether optimization persistence is cancelled. In addition, as an example, based on persistence cancellation information, at least one of persistence degree information representing an optimization persistence degree, target information representing an optimization purpose target or type information representing an optimization attribute may be signaled. In addition, as an example, data optimization information may be signaled based on information on whether it is optimized, representing whether data is optimized. As an example, information related to image optimization, i.e., data optimization information may be signaled as a bitstream, and for example, information on whether it is optimized may be signaled as a bitstream. As an example, information related to image optimization, e.g., data optimization information may include at least one of the 1st syntax to a eighteenth syntax described above, and may be signaled through an SEI message, etc. as described above, and since other embodiments are the same as described above, an overlapping description is omitted.

According to an embodiment of the present disclosure, a bitstream generated by an encoding method may be stored/recorded on a medium, etc. As an example, a medium may be a non-transitory computer-readable medium, or may be a storage medium and/or a recording medium.

According to an embodiment of the present disclosure, a method for transmitting a bitstream generated by an encoding method may be disclosed.

Meanwhile, for clarity of a description, it is described above by using only a term of image optimization, but as mentioned above, all descriptions based on image optimization may be substituted with a term such as image modification, image calibration, image adjustment, image change and/or image processing, etc.

The names of all syntax elements described above are arbitrarily designated for clarity of a description, and do not limit the names of corresponding syntax elements. In addition, each syntax element may be called information with a different name. In addition, some syntax elements may be obtained from a bitstream, but they may also be derived by another syntax element, which is also included in the embodiment of the present disclosure.

In addition, a bitstream generated by an image encoding method may also be stored on a non-transitory computer-readable recording medium.

In addition, as another example, a bitstream generated by an image encoding method may be transmitted to another apparatus (e.g., an image decoding apparatus, etc.). In this case, a bitstream transmission method may include the process of transmitting a bitstream.

Although exemplary methods of the present disclosure are expressed as a series of operations for the clarity of explanation, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

Embodiments described in the present disclosure may be implemented and performed on a processor, a microprocessor, a controller or a chip. For example, functional units shown in each diagram may be implemented and performed on a computer, a processor, a microprocessor, a controller or a chip. In this case, information (e.g., information on instructions) or an algorithm for implementation may be stored in a digital storage medium.

In addition, a decoder (a decoding apparatus) and an encoder (an encoding apparatus) to which embodiment(s) of the present disclosure are applied may be included in a multimedia broadcasting transmitting and receiving device, a mobile communication terminal, a home cinema video device, a digital cinema video device, a surveillance camera, a video communication device, a real-time communication device such as a video communication, etc., a mobile streaming device, a storage medium, a camcorder, a video-on-demand (VoD) service providing device, an OTT video (Over the top video) device, an Internet streaming service providing device, a three-dimensional (3D) video device, a virtual reality (VR) device, an augmented reality (AR) device, a video phone video device, a transportation terminal (e.g., a vehicle (including an autonomous vehicle) terminal, a robot terminal, an airplane terminal, a ship terminal, etc.), a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

In addition, a processing method to which embodiment(s) of the present disclosure are applied may be produced in the form of a program executed by a computer and may be stored in a computer-readable recording medium. Multimedia data having a data structure according to embodiment(s) of the present disclosure may also be stored in a computer-readable recording medium. A computer-readable recording medium includes all types of storage devices and distributed storage devices where computer-readable data is stored. A computer-readable recording medium may include, for example, a Blu-ray disc (BD), a universal serial buse (USB), ROM, PROM, EPROM, EEPROM, RAM, CD-ROM, a magnetic tape, a floppy disk and an optical data storage device. In addition, a computer-readable recording medium includes media implemented in the form of a carrier (e.g., transmission via the Internet). In addition, a bitstream generated by an encoding method may be stored in a computer-readable recording medium or may be transmitted through a wired or wireless communication network.

In addition, embodiment(s) of the present disclosure may be implemented as a computer program product by a program code, and a program code may be executed on a computer by embodiment(s) of the present disclosure. A program code may be stored on a computer-readable carrier.

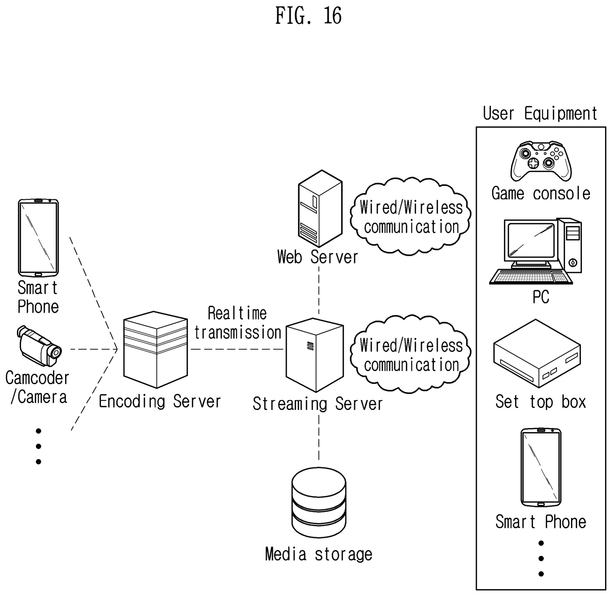

FIG. 16 is a diagram showing an example of a content streaming system to which embodiments of the present disclosure may be applied.

Referring to FIG. 16, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

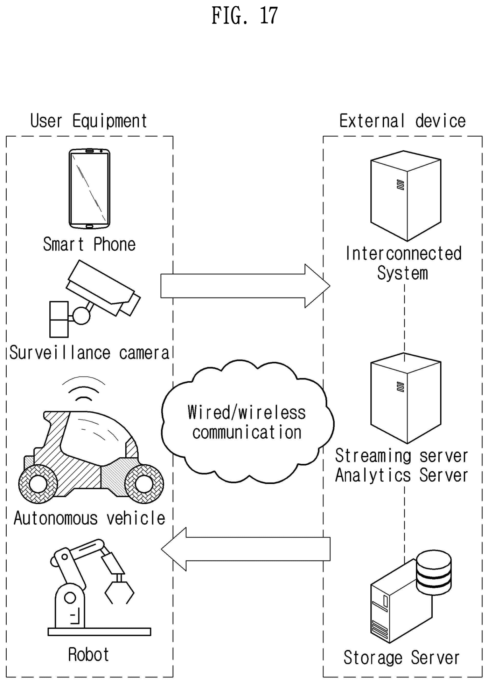

FIG. 17 is a diagram showing another example of a content streaming system to which embodiments of the present disclosure may be applied.

Referring to FIG. 17, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

### [Industrial Applicability]

An embodiment according to the present disclosure may be used for image encoding/decoding.

## Claims

1. A decoding method, comprising:
obtaining data optimization information related to an image data optimization method according to a purpose of image data; and
reconstructing the image data based on the data optimization information,
wherein the data optimization information includes data optimization application information representing whether the image data is optimized for each usage.

2. The method of claim 1, wherein the data optimization information further includes data optimization purpose information representing a purpose of optimizing the image data.

3. The method of claim 2, wherein the data optimization purpose information further includes machine task optimization information representing an image data optimization method for performing a machine task.

4. The method of claim 3, wherein the data optimization purpose information further includes human perception optimization information representing an image data optimization method for human perception.

5. The method of claim 4, wherein the human perception optimization information is obtained based on the machine task optimization information.

6. The method of claim 4, wherein the machine task optimization information is obtained based on the human perception optimization information.

7. The method of claim 1, wherein the data optimization information further includes data optimization persistence information representing persistence of an image data optimization method.

8. The method of claim 7, wherein the data optimization persistence information includes persistence cancellation information representing whether optimization persistence is cancelled.

9. The method of claim 8, wherein based on the persistence cancellation information, at least one of persistence degree information representing an optimization persistence degree, target information representing an optimization purpose target or type information representing an optimization attribute is further obtained.

10. The method of claim 1, wherein the data optimization information is obtained based on information on whether it is optimized representing whether data is optimized.

11. The method of claim 10, wherein the optimization status information is signaled as a bitstream.

12. The method of claim 1, wherein the data optimization information is signaled as a bitstream.

13. An encoding method, comprising:
determining data optimization information related to an image data optimization method according to a purpose of image data; and
encoding the data optimization information into a bitstream,
wherein the data optimization information includes data optimization application information representing whether the image data is optimized for each usage.

14. A medium for storing a bitstream generated by an encoding method, the encoding method comprising:
determining data optimization information related to an image data optimization method according to a purpose of image data; and
encoding the data optimization information into a bitstream,
wherein the data optimization information includes data optimization application information representing whether the image data is optimized for each usage.

15. A method for transmitting a bitstream generated by an encoding method, the encoding method comprising:
determining data optimization information related to an image data optimization method according to a purpose of image data; and
encoding the data optimization information into a bitstream,
wherein the data optimization information includes data optimization application information representing whether the image data is optimized for each usage.
